# EUROPÄISCHE PATENTANMELDUNG

(11) **EP 2 143 774 A2**
(43) Veröffentlichungstag der Anmeldung: **13.01.2010**
(21) Anmeldenummer: 09164726.3
(22) Anmeldetag: 07.07.2009
(51) Int. Cl.: C09J 201/02, C09J 11/04

(54) **Haftklebemassen und Verfahren zu deren Herstellung**

(30) Priorität: 11.07.2008 DE 102008032570
(71) Anmelder: tesa AG, 20253 Hamburg (DE)
(72) Erfinder: Prenzel, Dr. Alexander, 20259 Hamburg (DE); Dollase, Dr. Thilo, 22397 Hamburg (DE)

(57) **Zusammenfassung**

Die Erfindung betrifft ein Verfahren zur Herstellung einer Haftklebemasse auf Basis zumindest eines Polymers, bei welchem eine Vernetzung des zumindest einen Polymers durchgeführt wird, wobei das Polymer funktionelle Gruppen Y aufweist, wobei weiterhin das Polymer mit zumindest einer Sorte funktionalisierter Partikeln versetzt ist, welche zumindest eine nichtpolymere Basiseinheit aufweisen, dadurch gekennzeichnet, dass die Partikeln eine Oberflächenmodifikation der Basiseinheit aufweisen, wobei die Oberflächenmodifikation der Partikeln zumindest eine Sorte funktioneller Gruppen Z aufweist, die keine Reaktion mit der funktionellen Gruppe Y eingehen kann und durch thermische Energie, elektromagnetische Strahlung, Partikelstrahlung und/oder Schallenergie in die Gruppe X umgewandelt wird, und wobei die Vernetzung des Polymers zumindest zum Teil durch eine Reaktion der funktionellen Gruppen X der Partikeln und der funktionellen Gruppen Y des Polymers bewirkt wird, weiterhin Haftklebemassen, basierend auf zumindest einer vernetzten Polymerkomponente, bei welchen die Vernetzung der Polymerkomponente zumindest zum Teil durch Einbau von funktionalisierten Partikeln bewirkt wird, wobei die Partikeln zumindest eine nichtpolymere Basiseinheit sowie eine Oberflächenmodifikation dieser Basiseinheit aufweisen, wobei die Oberflächenmodifikation der Partikeln zumindest eine Sorte funktioneller Gruppen Z aufweist, welche nach Umwandlung in die Gruppen X mittels thermischer Energie, elektromagnetischer Strahlung, Partikelstrahlung und/oder Schallenergie in der Lage sind, mit in der Polymerkomponente vorhandenen funktionellen Gruppen Y zu reagieren, sowie die Verwendung von oberflächenmodifizierten funktionalisierten Partikeln mit einer nichtpolymeren Basiseinheit als Vernetzungsreagenzien zur Vernetzung von Polymeren zur Herstellung von Haftklebemassen.

## Beschreibung

Die vorliegende Erfindung betrifft Haftklebemassen, die bevorzugt lösungsmittelfrei prozessiert werden können und sich neben guter Verarbeitbarkeit und insbesondere Beschichtbarkeit durch gute Produkteigenschaften auszeichnen. Die Erfindung umfasst die Zusammensetzung neuartiger Haftklebemassenformulierungen, deren Herstellung, Verarbeitung und Verwendung in selbstklebenden Produkten. Ferner ist ein neuartiges Konzept Teil dieser Erfindung, über das die Kombination aus guter Verarbeitbarkeit und guten Produkteigenschaften für solche Haftklebemassenformulierungen realisiert werden kann.

### Stand der Technik

Im Bereich der Klebstoffe zeichnen sich Haftklebstoffe insbesondere durch ihre permanente Klebrigkeit aus. Ein Material, das permanente Klebrigkeit aufweist, muss zu jedem Zeitpunkt eine geeignete Kombination aus adhäsiven und kohäsiven Eigenschaften aufweisen. Dies unterscheidet es beispielsweise von reaktiven Klebstoffen, die im nicht ausreagierten Zustand kaum Kohäsion bieten. Für gute Produkteigenschaften gilt es, Haftklebemassen so einzustellen, dass die Balance aus adhäsiven und kohäsiven Eigenschaften optimal austariert ist. Diese Balance wird typischerweise dadurch erreicht, dass Polymerketten, die in Haftklebemasseformulierungen enthalten sind, in weitmaschige Netzwerke umgewandelt werden. Die Natur des Netzwerks hat dabei einen entscheidenden Einfluss auf die adhäsiven und kohäsiven Eigenschaften der Haftklebemasse. Ein Material mit ausgeprägter Vernetzung zeigt zwar gute Kohäsion, doch ist die Nachgiebigkeit reduziert, so dass sich das Material nur unzureichend an die Rauhigkeit einer Substratoberfläche anpassen kann. Zudem kann ein Material mit ausgeprägter Vernetzung nur in geringerem Maße Verformungsenergie, wie sie unter Belastung auftritt, dissipieren. Durch beide Phänomene wird die Klebkraft reduziert. Ein geringfügig vernetztes Material dagegen kann zwar gut auf raue Oberflächen auffließen und Verformungsenergie dissipieren, so dass die Anforderungen an die Adhäsion erfüllt sein können, jedoch widersteht das Material auf Grund einer reduzierten Kohäsion auf nur unzureichende Weise einer Belastung.

Eine Vernetzungsart, die einen Einfluss auf die Adhäsions/Kohäsions-Balance hat, sind temporäre Polymerkettenverschlaufungen. Diese reichen jedoch nur dann für eine genügende Kohäsion der Haftklebemasse aus, wenn die Molmasse der Polymere hinreichend hoch ist. Haftklebemassen basierend auf Naturkautschuken können alleinig auf diesem Vernetzungsprinzip beruhen. Weitere Möglichkeiten, die Vernetzung der Haftklebemasse einzustellen, sind chemische und damit irreversible Vernetzungen. Eine chemische Vernetzung kann ferner durch strahlenchemische Behandlung der Haftklebemassen erreicht werden. Weiterhin ist es möglich, physikalische Vernetzungsprinzipien zu nutzen. Beispiele für solche, typischerweise thermoreversiblen Vernetzungen in Haftklebemassen liegen in thermoplastischen Elastomeren wie in einigen Blockcopolymeren oder semikristallinen Polymeren vor.

Neben den angesprochenen Vernetzungsprinzipien können auch Füllstoffe zur Steigerung der Kohäsion eingesetzt werden. Dabei führt häufig eine Kombination aus Füllstoff/Füllstoff-Wechselwirkungen und Füllstoff/Polymer-Wechselwirkungen zu der gewünschten Verstärkung der Polymermatrix. Eine hierauf basierende Kohäsionssteigerung stellt eine weitere physikalische Vernetzungsart dar.

Für Füllstoffe, die im Hinblick auf einen verstärkenden Effekt in Haftklebemassen genannt werden, ist insbesondere die Klasse der pyrogenen Kieselsäuren zu nennen. Sie werden u. a. als Verdickungsmittel, Gelierungsmittel oder Thixotropiermittel in Fluiden unterschiedlichster Art eingesetzt, wobei man ihren Einfluss auf die rheologischen Eigenschaften der Fluide nutzt. Dabei wird der Einsatz von hydrophiler und hydrophober Kieselsäure beschrieben. Beispiele für die Verwendung von pyrogener Kieselsäure auf dem Gebiet der Haftklebemassen sind in US 20060205835 durch tesa AG, US 4,710,536 durch 3M und in EP 108 32 04 B1 durch Dow Corning beschrieben.

Als weitere Füllstoffe wurden in US 7,144,928 durch tesa AG, in WO 02/24756 A2 durch Rohm & Haas und in JP 2002 167,557 durch Sekisui die Verwendung von modifizierten Schichtsilikaten zur Verbesserung der Produkteigenschaften beschrieben.

In allen diesen Fällen resultiert die Verstärkung durch einen Einfluss der Partikel auf den Elastizitätsmodul des Elastomerkomposits. Die Wechselwirkung wird dabei durch physikalische Wechselwirkungen zwischen einzelnen Partikeln einerseits und Partikeln und Polymeren andererseits hervorgerufen. Oftmals reichen diese physikalischen Wechselwirkungen jedoch nicht aus, um bereits geringen mechanischen Deformationen, wie sie beispielsweise bei der Belastung einer Haftklebemassenfuge durch Scherung oder Schälung auftreten können, zu widerstehen. Dieses nichtlineare Phänomen ist als Payne-Effekt bekannt und äußert sich als Elastizitätsmodulverlust unter Deformation. Eine Übersicht zur Beschreibung dieses Effekts und zu verschiedenen mechanistischen Erklärungsansätzen geben Heinrich und Klüppel [G. Heinrich, M. Klüppel, Adv. Polym. Sci. 2002, 160, 1 - 44].

Im vorangegangenen Teil wurden verschiedene Beispiele für Vernetzungsarten gegeben, wie sie in Haftklebemassen zur Verbesserung der Produkteigenschaften, insbesondere der Kohäsion, angewendet werden können. Für jede dieser Vernetzungsarten stellt sich die Frage, inwieweit sie einen Einfluss auf die Verarbeitungseigenschaften und hier insbesondere das Beschichtungsverhalten haben. Eine diesbezügliche Diskussion wird im Folgenden vorgenommen.

Neben den Produkteigenschaften und damit der optimalen Balance aus adhäsiven und kohäsiven Eigenschaften einer Haftklebemasse ist auch ihre Verarbeitbarkeit von zentraler Bedeutung. Im Allgemeinen verringert sich die Verarbeitbarkeit durch die Vernetzung einer Formulierung. Meistens wird die Verarbeitbarkeit sogar unmöglich. Daher ist es vorteilhaft, die Vernetzung erst während oder nach der Verarbeitung insbesondere während oder nach der Beschichtung durchzuführen oder zu initiieren. Resultiert der Vernetzungszustand jedoch aus der bloßen Existenz eines Bestandteils in der Formulierung, wie es bei den oben genannten Füllstoffen der Fall ist, dann wird bereits eben dadurch das Verarbeitungsverhalten beeinträchtigt. Polymere mit hohen Molmassen zählen ebenso zu Formulierungsbestandteilen, die aufgrund ihres Verschlaufungszustands vorteilhafte Produkteigenschaften aufweisen, aber in der Verarbeitbarkeit - ebenfalls aufgrund ihres Verschlaufungszustands - Nachteile zeigen können. In beiden Fällen, also bei Verschlaufungen und Füllstoffen, wirken sich die physikalischen Prinzipien, die zur Vernetzung des Haftklebemassensystems und damit vorteilhaften Produkteigenschaften führen, negativ auf das Verarbeitungsverhalten, insbesondere die Beschichtbarkeit, aus.

Klassische Ansätze, dieses Dilemma zu umgehen, beruhen auf der Verwendung von Lösungsmitteln als Prozesshilfsmitteln. Ein gesteigertes Umweltbewusstsein und der Wunsch nach immer effizienteren Produktionsverfahren begründen jedoch den Trend zu lösungsmittelfreien Prozessen. Im Vergleich zu lösungsmittelhaltigen Verarbeitungsverfahren weisen die polymerbasierenden Haftklebstoffrohmassen bei den sogenannten Hotmelt-Verfahren (Heißschmelz-Verfahren) in ihrer Schmelze durch die Verschlaufungen und/oder Füllstoffpartikel einen Vernetzungszustand auf, der mit deutlich höheren Viskositäten und Elastizitäten verbunden ist.

Im Gegensatz zu physikalischen Vernetzungsarten bieten chemische Vernetzungsmethoden den Vorteil, dass die Netzwerkbildung durch geeignete Prozessführung erst während der Verarbeitung initiiert werden kann. Jedoch ist die Verwendung chemischer Vernetzer durch ihre Reaktivität über die Topfzeit limitiert. Bildet sich das Netzwerk in einer zu ausgeprägten Weise, bevor das Material beschichtet ist, dann führt die bereits gestiegene Elastizität zu einer Verschlechterung der Verarbeitungseigenschaften, und es können Beschichtungsbilder verminderter Qualität resultieren. Eine besondere Schwierigkeit ergibt sich bei lösungsmittelfreien Systemen, da hier erhöhte Temperaturen für die Verarbeitung notwendig sind, was gleichzeitig zu einer Beschleunigung der chemischen Vernetzungsreaktion führt. Ein Beispiel für ein solches System wird in US 20050129936 A1 durch tesa AG beschrieben. Strahlenchemische Vernetzungsmethoden erscheinen in diesem Sinne vorteilhaft, da erst nach der Beschichtung die Netzwerkbildung gezielt initiiert wird, wie es beispielsweise in EP 153 21 82 A1 durch tesa AG und EP 167 68 70 A1 durch National Starch vorgeschlagen wird. Um jedoch Netzwerke mit einer Struktur zu erhalten, die den späteren Produktanforderungen im Hinblick auf Scherfestigkeit genügen, sind abermals Polymere mit recht hoher Molmasse erforderlich, die wiederum durch ihren Verschlaufungszustand Nachteile im Verarbeitungsverhalten aufweisen können.

Typischerweise verschlechtert sich die Verarbeitbarkeit eines Materials mit der Erhöhung seiner Elastizität. Netzwerkbildung führt dabei immer zu einer Steigerung des Speichermoduls und damit höherer Elastizität. In Folge dessen verschlechtert sich die Fließfähigkeit, die zur Verarbeitung und zum Beschichten benötigt wird, oder geht sogar gänzlich verloren. Bei der Beschichtung können dann Inhomogenitäten im Beschichtungsbild bis hin zum Schmelzebruch auftreten. Verschiedene Autoren beschreiben dieses Phänomen insbesondere für Kapillar- und Extrusionsdüsen. Literatur hierzu ist bei Pahl et al. [M. Pahl, W. Gleißle, H.-M. Laun, Praktische Rheologie der Kunststoffe und Elastomere, 4. Aufl., 1995, VDI Verlag, Düsseldorf, S. 191f] und Tanner [R. I. Tanner, Engineering Rheology, 2. Aufl., 2000, Oxford University Press, Oxford, S. 523f] zu finden.

Es werden daher Systeme gesucht, die bevorzugt lösungsmittelfrei beschichtbar sind und die eine Kombination aus guten Produkteigenschaften einerseits - und zwar hier insbesondere im Bezug auf Kohäsion - aufweisen und andererseits verbesserte Verarbeitungseigenschaften, insbesondere Beschichtbarkeit zeigen.

Ein besonders vorteilhaftes Beispiel für Systeme, die dieser Anforderungskombination zumindest zum Teil genügen, stellen Blockcopolymere dar, die Segmente enthalten, die bei hohen Temperaturen erweichen (die so genannte Hartphase), und andere, die bei Anwendungstemperatur geschmolzen vorliegen. Die Erweichungstemperatur der Hartphase ist durch die Verwendung spezieller Monomere typischerweise so eingestellt, dass bei Raumtemperatur gute Produkteigenschaften vorherrschen, das Material aber bei prozesstechnisch sinnvollen Temperaturen auf einfache Weise aus der Schmelze beschichtet werden kann. Da diese Materialien typischerweise keine hohen Molmassen aufweisen, liegt ihre Schmelzviskosität und die Elastizität, sobald die Hartphase erweicht vorliegt, vergleichsweise niedrig.

Nachteilig an den angesprochenen Haftklebemassen basierend auf Blockcopolymeren ist jedoch ihre Wärmescherfestigkeit, die durch die bei erhöhter Temperatur einsetzende Erweichung der Hartdomänen limitiert ist. Als ein weiterer Nachteil sind die aufwendigen Herstellungsbedingungen für Blockcopolymere zu nennen. Um Polymere mit der geforderten blockartigen Struktur in ausreichender Qualität herstellen zu können, sind kontrollierte oder lebende Polymerisationverfahren erforderlich, die zum Teil aufwendig sind. Zudem sind nicht immer alle Monomerkombinationen auf einfache Weise realisierbar. Damit ist der Blockcopolymeransatz einerseits nicht als universell also flexibel für viele Polymersysteme anzusehen. Andererseits besteht der Bedarf an Haftklebemassen mit einer besseren Wärmescherfestigkeit.

Oberflächenfunktionalisierte Füllstoffe, insbesondere die Klassen der pyrogenen und gefällten Kieselsäuren, werden ebenfalls in US 2006/0035087 A1 von NanoProducts Corp., US 2006/0204528 A1 von Byk-Chemie GmbH und WO 2007/024838 von E. I. du Pont de Nemours and Co. beschrieben, um ein chemisches Netzwerk aufzubauen. Die Vernetzung erfolgt dabei durch Ausbildung kovalenter Bindungen, wobei die Vernetzungsreaktionen thermisch initiiert werden. Dies wiederum kann problematisch bei der Einarbeitung der Füllstoffe als auch bei der Verarbeitung der Komposite sein, da die Vernetzung aufgrund erhöhter Temperaturen schon im Prozess beginnen kann. In der DE 10 2005 022 782 A1 von tesa AG werden funktionalisierte Partikel beschrieben, die unter Einwirkung von elektromagnetischer Strahlung und/oder Partikelstrahlung zu einer Vernetzung der Haftklebemasse führen, jedoch besteht weiterhin Bedarf an thermisch initiierbaren Vernetzungsmethoden für Haftklebemassen, die dennoch in einem Hotmelt-Verfahren (Heißschmelz-Verfahren) verarbeitbar sind.

### Aufgabenstellung

Ziel der vorliegenden Erfindung ist es daher, ein flexibles Konzept zur Verfügung zu stellen, das eine geeignete Kombination von Material und Verfahren umfasst, so dass bevorzugt lösungsmittelfrei prozessierbare Haftklebemassen mit guten Verarbeitungseigenschaften, wie z. B. einer erhöhten Topfzeit der Vernetzungsreaktion, und guten Produkteigenschaften hergestellt werden können.

Wie jetzt gefunden wurde, lässt sich diese Anforderungskombination bestehend aus guter Verarbeitbarkeit und guten Produkteigenschaften dadurch lösen, dass ein Verfahren zur Herstellung von vernetzten Haftklebemassen eingesetzt wird, bei welchem eine spezielle Haftklebemassenformulierung derartig funktionalisierte Partikeln mit blockierten und/oder desaktivierten Funktionalitäten enthält, dass die Partikeln während oder nach der Beschichtung durch Einwirken von insbesondere thermischer Energie und/oder Strahlungsenergie, insbesondere von elektromagnetischer Strahlung oder Partikelstrahlung und/oder Schallenergie mit zumindest einer Sorte polymerer Bestandteile der Haftklebemassenformulierung verknüpft werden können.

### Beschreibung

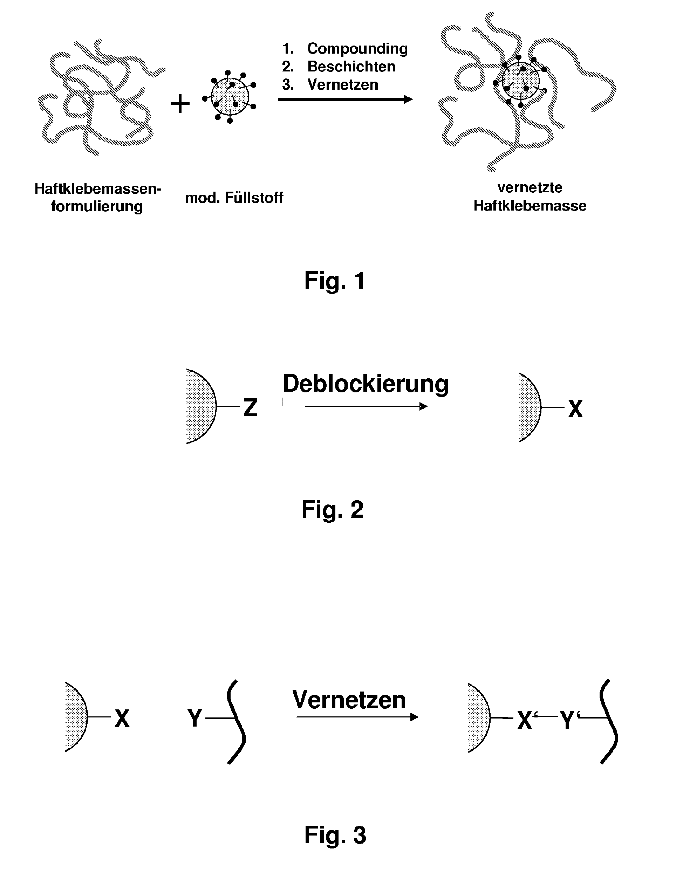

Die vorliegende Erfindung betrifft ein Verfahren zur Herstellung einer vernetzten Haftklebemasse, vernetzte Haftklebemassen, welche nach einem derartigen Verfahren erhältlich sind, sowie die Verwendung derartiger Haftklebemassen. Weiterhin umfasst die Erfindung Zwischenprodukte aus einem derartigen Verfahren, insbesondere die Zusammensetzung neuartiger Formulierungen für Haftklebemassen. Die Kombination der erfindungsgemäßen neuartigen Haftklebemassenformulierungen mit dem erfindungsgemäßen Herstellungsverfahren ist ebenfalls erfindungsgemäß und ein zentraler Bestandteil dieser Anmeldung (vgl. hierzu auch Fig. 1). Fig, 1 zeigt das grundsätzliche Prinzip, wie eine Haftklebemassenformulierung mittels eines modifizierten Füllstoffes über einen Prozess, der insbesondere eine Compoundierung, das Beschichten der Masse auf einen Träger und das anschließende Vernetzen der Masse umfasst, zu einer vernetzten Haftklebemasse umgesetzt wird.

Gegenstand der Erfindung ist ein Verfahren zur Herstellung einer Haftklebemasse umfassend das Vernetzungsprodukt aus zumindest einem Polymer und zumindest einer Sorte funktionalisierter Partikeln,
- wobei das Polymer reaktive Zentren aufweist,
- wobei die funktionalisierten Partikeln zumindest eine nichtpolymere Basiseinheit aufweisen, die nichtpolymere Basiseinheit eine Oberflächenmodifikation aufweist, wobei die Oberflächenmodifikation der nichtpolymeren Basiseinheit zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen,
**dadurch gekennzeichnet, dass** das Verfahren die folgenden Verfahrensschritte umfasst:
- Umwandlung zumindest eines Teils der funktionellen Gruppen Z der Partikeln durch Energiezufuhr unter Überwindung der Umwandlungs-Aktivierungsenergie in funktionelle Gruppen X, die in der Lage sind, unter geeigneten Verfahrensbedingungen eine Reaktion mit den reaktive Zentren des Polymers einzugehen,
- Bildung des Vernetzungsproduktes, umfassend die Reaktion der funktionellen Gruppen X der Partikeln mit den reaktive Zentren des Polymers unter den geeigneten Verfahrensbedingungen.

In besonders bevorzugter Vorgehensweise ist die zugeführte Energie thermische Energie, elektromagnetische Strahlung, Partikelstrahlung und/oder Schallenergie.

Eine sehr vorteilhafte Ausgestaltung des Verfahrens zeichnet sich dadurch aus, dass die reaktiven Zentren funktionelle Gruppen Y sind.

Die Erfindung betrifft dementsprechend ein Verfahren zur Herstellung einer Haftklebemasse auf Basis zumindest eines Polymers A, bei welchem eine Vernetzung des zumindest einen Polymers A durchgeführt wird, wobei das Polymer funktionelle Gruppen Y aufweisen kann, wobei weiterhin das Polymer mit zumindest einer Sorte funktionalisierter Partikeln B (im weiteren auch "Füllstoffpartikeln" genannt) versetzt ist. Die Partikeln weisen zumindest eine nichtpolymere Basiseinheit sowie eine Oberflächenmodifikation dieser Basiseinheit auf, die Oberflächenmodifikation der Basiseinheit zumindest eine Sorte funktioneller Gruppen Z, bei denen es sich um geschützte oder blockierte Gruppen X handelt und die erst durch äußere Stimuli (z. B. Temperatur, aktinische Strahlung, Ultraschall) durch Zerfall, Dissoziation (homolytisch oder heterolytisch) oder andere chemische Reaktionen in die Gruppe X umgewandelt werden (siehe Fig. 2: Entschützung oder Deblockierung der Gruppe Z unter Bildung der Gruppe X). Die Vernetzung des Polymers wird erfindungsgemäß zumindest zum Teil durch eine Reaktion der funktionellen Gruppen X der Partikeln und dem Polymer bewirkt, wobei dieses funktionelle Gruppen Y aufweisen kann. Die Gruppe Z trägt an sich nicht an der Vernetzung mit dem Polymer A bei und muss daher erst in die Gruppe X umgewandelt werden. Die Vernetzung kann im erfindungsgemäßen Sinne auch vollständig mittels der funktionalisierten Partikeln bewirkt werden.

Die Unteransprüche betreffen vorteilhafte Varianten des erfindungsgemäßen Verfahrens.

Die Erfindung betrifft weiterhin eine Haftklebemasse, basierend auf zumindest einer vernetzten Polymerkomponente A, wobei die Vernetzung der Polymerkomponente A zumindest zum Teil durch Einbau von funktionalisierten Partikeln B bewirkt wird, wobei die Partikeln B zumindest eine nichtpolymere Basiseinheit sowie eine Oberflächenmodifikation dieser Basiseinheit aufweisen, wobei die Oberflächenmodifikation der Partikeln B zumindest eine Sorte blockierter oder geschützter funktioneller Gruppen X aufweist, welche nach Aktivierung in der Lage sind, mit in der Polymerkomponente A zu reagieren. wobei funktionellen Gruppen Y in der Polymerkomponente A vorhanden sein können.

Insbesondere als erfindungsgemäß herausgestellt werden soll eine solche Haftklebemasse, wenn sie nach den als erfindungsgemäß beschriebenen Verfahren erhältlich ist.

Die Erfindung betrifft zusätzlich die Verwendung von oberflächenmodifizierten Partikeln mit einer nichtpolymeren Basiseinheit, insbesondere von solchen wie im Rahmen dieser Schrift beschriebenen Partikeln, als Vernetzungsreagenzien von Polymeren zur Herstellung von Haftklebemassen.

Weiterhin als erfindungsgemäß gelten die noch nicht vernetzten, mit den funktionalisierten Partikeln B versetzten Polymere A. Dabei können in der zu vernetzenden Haftklebemasse weitere Komponenten anwesend sein.

Die erfindungsgemäßen Haftklebemassenformulierungen enthalten zumindest eine Sorte eines Polymers A, das zumindest eine Sorte an Gruppen vom Typ Y enthalten kann, sowie zumindest eine Sorte an Füllstoffpartikeln B, die an der Partikeloberfläche zumindest eine Sorte an Gruppen vom Typ X enthalten, welche durch Aktivierung aus einer nicht zur Vernetzung befähigten Gruppe vom Typ Z hervorgehen. Die Gruppe vom Typ Z ist im Sinne der Erfindung so gewählt, dass sich aus ihr durch Einwirken von thermischer Energie, elektromagnetischer Strahlung, Partikelstrahlung und/oder Schallenergie die Gruppe vom Typ X ergibt, welche wiederum unabhängig oder in Kombination mit der Entschützung bzw. Umwandlung der Gruppe Z ebenfalls durch Einwirken thermischer Energie, elektromagnetischer Strahlung, Partikelstrahlung und/oder Schallenergie eine Bindung zwischen dem Polymer und zumindest einer funktionellen Gruppe vom Typ X und/oder zumindest einer Gruppe im Polymer vom Typ Y und zumindest einer funktionellen Gruppe vom Typ X gebildet wird, so dass ein Addukt vom Typ B-X'-A (Reaktion mit reaktiven Zentrum) und/oder B-X'-Y'-A (Reaktion mit funktioneller Gruppe Y) entsteht (siehe hierzu Fig. 3). Dabei deutet die Bezeichnung X' an, dass sich die Struktur der funktionellen Gruppe X nach abgelaufener Reaktion geändert haben kann. In gleicher Weise zeigt die Bezeichnung Y' an, dass sich die Struktur der funktionellen Gruppe Y nach abgelaufener Reaktion geändert haben kann.

Es ist ebenfalls erfindungsgemäß, wenn sich die funktionellen Gruppen X und Y nicht in ihrer Struktur geändert haben, aber trotzdem eine Verknüpfung eingegangen sind.

In dieser Beschreibung sind unter den Begriffen "Elektromagnetische Strahlung" und "Partikelstrahlung" alle Strahlungsformen zu verstehen, die bei V. D. McGinniss zusammengefasst sind [V. D. McGinniss in Encyclopedia of Polymer Science and Engineering, H. F. Mark, N. M. Bikales, C. G. Overberger, G. Menges (Hrsg.), 2. Aufl., 1986, Wiley, New York, Bd. 4, S. 418ff]. Dem Fachmann sind weitere Arten der Strahlung bekannt, die ebenfalls erfinderisch anwendbar sind. Die Verwendung von Schallenergie, insbesondere Ultraschall, in chemischen Reaktionen wird ebenfalls immer bedeutender und findet in der Praxis Anwendung [E. B. Flint, K. S. Suslick; Science 1991, 253, 1397ff]. Die Verwendung von thermischer Energie ist bevorzugt erfindungsgemäß einsetzbar.

Durch die erfindungsgemäße Verwendung der hier beschriebenen neuartigen Formulierungen in Kombination mit dem hier beschriebenen Verfahren werden vorteilhaft vernetzte Haftklebemassen gewonnen. Die funktionalisierten Füllstoffpartikel B wirken dabei als multifunktionelle Vernetzer [DE 10 2005 022 782]. Durch ihr Vermögen, mehrere Polymerketten in einem Vernetzungspunkt zu verknüpfen, ist es möglich, die Molmasse der zu vernetzenden polymeren Bestandteile der Haftklebemasse zu reduzieren (von polymeren Bestandteilen für die Haftklebemasse auszugehen, die - bezogen auf übliche Verfahren nach dem Stand der Technik - eine reduzierte Molmasse aufweisen). Es folgt eine Verbesserung des Verarbeitungsverhaltens. Umgekehrt ist es im Sinne dieser Erfindung auch möglich, Haftklebemassen, die vernetzbare Polymere geringer Molmasse enthalten, mit den erfindungsgemäßen Füllstoffpartikeln zu versetzen. Nach Einwirken thermischer Energie, elektromagnetischer Strahlung, von Partikelstrahlung und/oder Schallenergie werden andere Netzwerkstrukturen erhalten, als wenn die erfindungsgemäßen Füllstoffpartikel nicht zugegen wären. Dieser neuartige Vernetzungszustand zeichnet sich dadurch aus, dass mit ihm verbesserte Produkteigenschaften, insbesondere eine gesteigerte Kohäsion der Haftklebemasse korreliert sind. Typischerweise ist es charakteristisch für den neuartigen Vernetzungszustand, dass die adhäsiven Eigenschaften der erfindungsgemäßen Haftklebemassen zumindest auf dem Niveau liegen, auf dem auch eine vernetzte Haftklebemasse liegt, die keine erfindungsgemäßen Füllstoffpartikel enthält, aber vergleichbar prozessiert wurde und einen vergleichbaren Gelanteil aufweist.

Vorteilhaft geht man vor, indem die erfindungsgemäßen Haftklebemassenformulierungen, die zumindest eine Sorte eines erfindungsgemäßen Polymers A und zumindest eine Sorte eines funktionalisierten Füllstoffpartikels B enthalten, im Rohzustand, also vor Beginn des Prozessierens, gute Verarbeitungseigenschaften aufweisen. Als Verarbeitungseigenschaften seien im Sinne dieser Erfindung insbesondere die Viskosität der Haftklebemassenformulierung sowie ihre Elastizität gemeint. Die Viskosität wird als Nullviskosität η₀ für verschiedene Temperaturen angegeben. Sie kann aus kapillarviskosimetrisch bestimmten Viskositätskurven erhalten werden. Die Elastizität wird in Form der ersten Normalspannungsdifferenz N₁ angegeben, ebenfalls bei verschiedenen Temperaturen. Auch die Daten zur ersten Normalspannungsdifferenz können aus kapillarviskosimetrischen Experimenten erhalten werden. Beide Größen, die Viskosität und die erste Normalspannungsdifferenz, sind im Allgemeinen für Haftklebemassenformulierungen scherratenabhängig. Je nach Prozess und den darin auftretenden Scherraten können sie also für eine gegebene Haftklebemasseformulierung variieren. Es ist für die Beschreibung dieser Erfindung sinnvoll, sich auf eine Scherrate zu beschränken, ohne jedoch damit die erfindungsgemäß einsetzbaren Verfahren diesbezüglich einzuschränken. Als eine solche Scherrate wird die Scherrate von 1000 s⁻¹ als repräsentativer vorteilhafter Wert ausgewählt. Für die Verarbeitbarkeit und insbesondere die Beschichtbarkeit ist es sehr von Vorteil, wenn ein bestimmtes Verhältnis aus Elastizität und Viskosität bei der durch den Prozess vorgegebenen Scherrate nicht überschritten wird. Ist dieses Verhältnis zu hoch, überwiegt der elastische Charakter des zu beschichtenden Materials. In Folge dessen kann Schmelzebruch auftreten, was sich in einem inhomogenen Strichbild äußert [M. Pahl, W. Gleißle, H.-M. Laun, Praktische Rheologie der Kunststoffe und Elastomere, 4. Aufl., 1995, VDI Verlag, Düsseldorf, S. 191f].

Erkenntnissen der kapillarviskosimetrischen Rheologie entsprechend bestimmt das Verhältnis R = N₁/τ aus erster Normalspannungsdifferenz N₁ und der Schubspannung τ das Verarbeitungsverhalten einer Polymerschmelze [W. Gleißle, Rheol. Acta 1982, 21, 484-487; M. Pahl, W. Gleißle, H.-M. Laun, Praktische Rheologie der Kunststoffe und Elastomere, 4. Aufl., 1995, VDI Verlag, Düsseldorf, S. 320ff]. Die Schubspannung τ ist dabei als Produkt aus Viskosität und Scherrate gegeben. Der Zähler des Quotienten N₁/τ beschreibt also die elastischen Eigenschaften des Materials, der Nenner die viskosen. Letzterer führt zudem die Abhängigkeit von der Prozessgeschwindigkeit in Form der Scherrate vor Augen. Oberhalb eines kritischen Wertes für R treten Fließanomalien auf.

Gelingt es also, bei den Scherraten, die während der Verarbeitung vorherrschen, N₁ durch ein Materialkonzept zu reduzieren oder zumindest nicht weiter durch zusätzliche Vernetzungseinflüsse anwachsen zu lassen, dann wird erwartet, dass sich das Material ohne Schmelzeinhomogenitäten beschichten lässt. Dies kann beispielsweise derart erfolgen, dass eine Vernetzung erst nach der Beschichtung initiiert wird, wie es beispielsweise bei einer strahlenchemischen Behandlung möglich ist. Das bestrahlte und damit vernetzte Material weist eine erhöhte Elastizität und damit verbunden eine höhere erste Normalspannungsdifferenz auf und könnte in diesem Zustand nicht mit gutem Beschichtungsbild verarbeitet werden. Die nichtvernetzte Schmelze jedoch ist weniger elastisch, zeigt eine geringere erste Normalspannungsdifferenz und lässt sich erfolgreich beschichten. Für Haftklebemassen mit guter Kohäsion werden häufig Polymere mit hohen Molmassen benötigt. Diese können allerdings durch intermolekulare Wechselwirkungen, wie Verschlaufungen, bereits im chemisch unvernetzten Zustand hohe Elastizitäten aufweisen, was zu Nachteilen im Beschichtungsverhalten führen kann.

Die neuartige Erfindung folgt dem Konzept, dass die Kohäsion der erfindungsgemäßen Haftklebemasse im Wesentlichen durch einen verbesserten Vernetzungszustand über chemische Verknüpfung von Polymeren an Füllstoffoberflächen erfolgt. Daher ist eine hohe Molmasse der Polymere nicht mehr zwingend erforderlich und das Beschichtungsverhalten in Folge dessen in nicht mehr so ausgeprägtem Maße durch Kettenverschlaufungen eingeschränkt. Die Partikel selbst liegen während des Prozessierens als disperse Phase in der Haftklebemassenformulierung vor. Da sie zu diesem Zeitpunkt noch nicht chemisch mit polymeren Bestandteilen der Formulierung verknüpft sind, tragen sie zu diesem Zeitpunkt nur unvollständig zur Elastizität der Formulierung bei. Erst bei Initiierung der Vernetzungsreaktion während und/oder nach der Beschichtung wird die gewünschte Kohäsion erzeugt. Die Anforderungen an die erfindungsgemäßen Haftklebemasseformulierungen lauten damit, dass sich die Formulierung im nichtvernetzten Zustand durch eine gute Verarbeitbarkeit, gegeben beispielsweise durch eine niedrige erste Normalspannungsdifferenz, und insbesondere das Verhältnis R, sowie im vernetzten Zustand eine gute Kohäsion, gegeben beispielsweise durch die Scherstandzeit oder den Gelanteil eines Selbstklebebandprüfkörpers, auszeichnen muss. Das neuartige erfindungsgemäße Konzept umschließt ebenfalls die Verwendung und Beschichtung von Haftklebemasseformulierungen in Lösung, bei denen aber die zuvor beschriebenen Probleme eher unwesentlich sind. Der Stand der Technik weist aber noch Verbesserungspotenzial in Hinblick auf die Vernetzungsreaktion zwischen Partikeln und Polymer auf. Die vorliegende Erfindung schlägt hierfür neuartige Lösungen vor. Vorteilhafte erfindungsgemäße Haftklebemassen, die über den erfindungsgemäßen Beschichtungs- und Vernetzungsprozess gewonnen werden, weisen im Vergleich zu einer Formulierung, die genauso beschichtet und vernetzt wurde, jedoch keine erfindungsgemäßen Füllstoffpartikel enthält, aber einen vergleichbaren Gelanteil aufweist (Test B), typischerweise eine um mindestens 50 %, bevorzugt um mindestens 100 % gesteigerte Scherstandzeit nach Test D auf. Die Adhäsion, gegeben durch die Klebkraft nach Test C, ist für das erfindungsgemäße Haftklebemassensystem typischerweise mindestens auf dem gleichen Niveau, auf dem auch die Adhäsion des zuvor genannten Referenzsystems liegt, oder liegt bevorzugt sogar um mindestens 25 % höher. Gleichzeitig erhöht sich der R-Wert der erfindungsgemäßen Haftklebemasse im unvernetzten Zustand bei einer materialspezifisch geeigneten Temperatur zwischen 25 °C und 300 °C, ebenfalls im Vergleich zu einer Formulierung, die keine erfindungsgemäßen Füllstoffpartikel enthält und auch unvernetzt ist, kaum und bleibt bei Werten von bevorzugt höchstens R = 3,5 (Test A2). Die Viskosität der erfindungsgemäßen Haftklebemassen liegt bei derselben Temperatur nicht oder nur wenig, und zwar bis bevorzugt höchstens 25 %, höher als die einer Formulierung, die keine erfindungsgemäßen Füllstoffpartikel enthält und auch unvernetzt ist (Test A1).

### Zusammensetzung erfindungsgemäßer Haftklebemassenformulierungen

Die erfindungsgemäßen Haftklebemassenformulierungen enthalten zumindest eine Polymersorte A und zumindest eine Füllstoffpartikelsorte B, wobei sich die zumindest eine Polymersorte A mit Gruppen X, die sich auf der Oberfläche der zumindest einen Füllstoffpartikelsorte B befinden, durch Einwirken thermischer Energie, elektromagnetischer Strahlung, von Partikelstrahlung und/oder Schallenergie während und/oder nach einer Beschichtung verbinden kann. Das Polymer kann Gruppen vom Typ Y tragen, welche zur Reaktion mit der funktionellen Gruppe X befähigt sind. Die auf der Oberfläche der zumindest einen Füllstoffsorte B gebundene Gruppe X geht aus einer ebenfalls auf der Oberfläche der gleichen Partikel gebundenen Gruppe Z mittels thermischer Aktivierung oder durch elektromagnetische Strahlung, Partikelstrahlung und/oder Schallenergie - im Weiteren nur noch Aktivierung genannt - hervor, wobei die Gruppe vom Typ Z an sich nicht für Vernetzungsreaktionen geeignet ist. Die erfindungsgemäße Haftklebemasse kann optional weitere Bestandteile außer Polymeren A und Füllstoffpartikeln B enthalten. In diesem Abschnitt soll auf die erfindungsgemäßen Polymere A, die erfindungsgemäßen Füllstoffe B und weitere in den erfindungsgemäßen Haftklebemasseformulierungen optional einsetzbare Bestandteile eingegangen werden sowie die Art der Gruppen X, Y und Z beschrieben werden.

Die erfindungsgemäßen Haftklebemassen enthalten vorteilhaft bis zu 50 Gew.-% zumindest einer Füllstoffpartikelsorte B, bevorzugt bis zu 20 Gew.-%, sehr bevorzugt bis zu 10 Gew.-%.

### Polymere A

Die zumindest eine Polymersorte A ist dann bevorzugt erfindungsgemäß, wenn sie eine Molmasse von nicht mehr als 10.000.000 g/mol, bevorzugt nicht mehr als 500.000 g/mol aufweist. Ferner weist die zumindest eine Polymersorte A bevorzugt eine Erweichungstemperatur von kleiner als 100 °C auf, besonders bevorzugt kleiner als 20 °C. Die zumindest eine Polymersorte A kann von linearer, verzweigter, sternförmiger oder gepfropfter Struktur sein, um nur einige Beispiele zu geben, und als Homopolymer oder Copolymer aufgebaut sein. Die Bezeichnung "Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten sowie ganze Blöcke eines Monomers in den Polymerketten vorkommen.

Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die Glasübergangstemperatur für amorphe Systeme und die Schmelztemperatur für semikristalline Systeme verstanden, die beispielsweise durch die dynamische Differentialkalorimetrie (DSC) bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Es ist zudem im Sinne dieser Erfindung möglich, dass es sich bei der zumindest einen Polymersorte A um ein Blockcopolymer handelt. Vorteilhaft sind insbesondere solche Blockcopolymere, bei denen bevorzugt jeder der vorkommenden Blöcke (unabhängig voneinander) eine Molmasse von kleiner als 1.000.000 g/mol, bevorzugt kleiner als 250.000 g/mol aufweist, von linearer, verzweigter, sternförmiger oder gepfropfter Struktur ist und/oder als Homopolymer oder statistisches Copolymer aufgebaut ist. Ferner vorteilhaft weist zumindest eine Blocksorte eine Erweichungstemperatur von kleiner als 100 °C auf, bevorzugt kleiner als 20 °C. Die einzelnen im Blockcopolymer vorkommenden Blocksorten können sich im Hinblick auf die Comonomerzusammensetzung und optional in ihrer Molmasse und/oder Erweichungstemperatur und/oder Struktur (z. B. linearer oder verzweigter Art) unterscheiden. Die verschiedenen Polymerarme in sternförmigen und gepfropften Systemen können von verschiedener chemischer Natur sein, also aus unterschiedlichen Monomeren bestehen oder/und unterschiedliche Comonomerzusammensetzung aufweisen.

Polymere der Sorte A sind weiterhin dann erfindungsgemäß bevorzugt, wenn sie ohne reaktive Gruppen oder mit zumindest einer im Polymer enthaltenen Sorte an Gruppen Y mit Gruppen vom Typ X, die sich auf der Oberfläche der zumindest einen Füllstoffpartikelsorte B befinden, unter Einwirkung von thermischer Energie, elektromagnetischer Strahlung, von Partikelstrahlung und/oder Schallenergie während oder nach einer Beschichtung eine Verbindung eingehen können. Die Gruppen X gehen mittels Aktivierung durch thermische Energie, elektromagnetische Strahlung, Partikelstrahlung und/oder Schallenergie aus den Gruppen Z hervor, die wiederum ohne Aktivierung und Umwandlung zu den funktionellen Gruppen X keine Vernetzungsreaktionen eingehen können und es somit ermöglichen, den Prozess kontrolliert zu steuern. Die Gruppen der zumindest einen Sorte Y können auf vielfältige Weise in der zumindest einen Polymersorte A vorhanden sein. Die zumindest eine Polymersorte A kann beispielsweise als Homopolymer aus Monomeren, die die zumindest eine Sorte an Gruppen Y enthalten, aufgebaut sein. Ferner kann die zumindest eine Polymersorte A auch als statistisches Copolymer aufgebaut sein, das zumindest aus einer Sorte an Monomeren, die die zumindest eine Sorte an Gruppen Y enthalten, und optional einer oder mehrerer Sorten an Monomeren, die keine derartigen Gruppen enthält, erhalten wird. Es ist weiterhin möglich, dass die zumindest eine Polymersorte A die zumindest eine Sorte an Gruppen Y lediglich an einzelnen Punkten entlang des Polymergerüsts enthält. Beispiele für solche Ausführungsformen beinhalten Gruppen, die sich an Kettenenden, im Bereich von Ketten- oder Blockmittelpunkten, im Bereich von Verzweigungspunkten oder im Bereich von Blockverbindungspunkten befinden. Polymere der zumindest einen Sorte A sind dann erfindungsgemäß besonders bevorzugt, wenn das Polymermolekül im Mittel wenigstens zwei solcher Gruppen enthält. Es ist außerdem möglich, dass die zumindest zwei Gruppen Y über eine Pfropfreaktion in das zumindest eine Polymer A eingebracht werden. Es ist ebenfalls erfindungsgemäß, die zumindest zwei Gruppen Y in die zumindest eine Polymersorte A einzubringen, indem eine polymeranaloge Reaktion durchgeführt wird. Es sind zudem beliebige Kombinationen aus den genannten Funktionalisierungsarten erfindungsgemäß.

Als Beispiele für Polymere A, aber ohne eine Einschränkung vornehmen zu wollen, seien als vorteilhaft im Sinne dieser Erfindung die folgenden Homopolymere und statistische Copolymere genannt: Polyether, wie z. B. Polyethylenglykol, Polypropylenglykol oder Polytetrahydrofuran, Polydiene, wie z. B. Polybutadien oder Polyisopren, hydrierte Polydiene, wie z. B. Polyethylenbutylen oder Polyethylenpropylen, Kautschuke, wie z. B. Naturkautschuk, Nitril-Kautschuk oder Chloropren-Kautschuk, butadienhaltiger Kautschuk, isoprenhaltiger Kautschuk, Polyisobutylen, Polyolefine, wie z. B. Ethylenhomopolymere oder -copolymere, Propylenhomopolymere oder -copolymere, metallocenkatalysierte Polyolefine, Polysiloxane, Polyalkylvinylether, Polymere unfunktionalisierter α,β-ungesättigter Ester, Copolymere auf Basis α,β- ungesättigter Ester, Copolymere auf Basis von Alkylvinylethern sowie Ethylenvinylacetat-Copolymere, EPDM-Kautschuke und Styrol-Butadien-Kautschuke genannt. Weitere vorteilhaft einsetzbare statistische Copolymere werden durch Copolymerisation von Isopren und/oder Butadien erhalten, weisen 1,4-, 1,2- und/oder 3,4- bzw. 1,4- und/oder 1,2-Einbau der Monomere in die Polymerkette auf und können vollständig oder partiell hydriert vorliegen.

Besonders vorteilhaft im Sinne dieser Erfindung sind statistische Copolymere auf Basis von unfunktionalisierten α,β-ungesättigten Estern einsetzbar. Werden diese für die zumindest eine Polymersorte A mit Copolymercharakter verwendet, dann können als Monomere bei ihrer Herstellung vorteilhaft prinzipiell alle dem Fachmann geläufigen Verbindungen, die sich zur Synthese von Polymeren eignen, eingesetzt werden. Bevorzugt werden α,β-ungesättigte Alkylester der allgemeinen Struktur

CH₂=CH(R¹)(COOR²) (I)

verwendet, wobei R¹ = H oder CH₃ und R² = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur I für Polymere A mit Copolymercharakter eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Butylmethacrylat, n-Pentylacrylat, n-Pentylmethacrylat, n-Hexylacrylat, n-Hexylmethacrylat, n-Heptylacrylat, n-Heptylmethacrylat, n-Octylacrylat, n-Octylmethacrylat, n-Nonylacrylat, n-Nonylmethacrylat, n-Decylacrylat, n-Decylmethacrylat, Dodecylacrylat, Dodecylmethacrylat, Hexadecylacrylat, Hexadecylmethacrylat, Octadecylacrylat, Octadecylmethacrylat, deren verzweigte Isomere, wie z. B. sec-Butylacrylat, sec-Butylmethacrylat, *tert*-Butylacrylat, *tert-*Butylmethacrylat, 2-Ethylhexylacrylat, 2-Ethylhexyl-methacrylat und iso-Octylacrylat sowie cyclische Monomere wie z. B. Cyclohexylacrylat, Cyclohexylmethacrylat, Norbornylacrylat, Norbornylmethacrylat, Isobornylacrylat und Isobornylmethacrylat.

Ebenfalls einsetzbar als Monomere für Polymere A mit Copolymercharakter sind Acryl- und Methacrylsäureester, die aromatische Reste enthalten, wie z. B. Phenylacrylat, Benzylacrylat, Benzoinacrylat, Benzophenonacrylat, Phenylmethacrylat, Benzylmethacrylat, Benzoinmethacrylat oder Benzophenonmethacrylat.

Ferner können ethoxylierte und propoxylierte Acrylate und Methacrylate erfindungsgemäß eingesetzt werden. In solchen Systemen besteht die Acrylat- oder Methacrylatseitenkette formal aus einem Oligomer oder Polymer des Ethylenoxids oder Propylenoxids.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol, α-Methylstyrol.

In einer bevorzugten Auslegungsform dieser Erfindung enthält die zumindest eine Polymersorte A ihre zumindest zwei Gruppen Y in Form zumindest eines speziellen Comonomers, das während der Polymerisation des Polymers statistisch copolymerisiert wurde. Dabei liegt der Stoffmengenanteil dieses zumindest einen speziellen Comonomers in Bezug auf die Zusammensetzung des Gesamtmonomergemischs bei der Herstellung des Gesamtpolymers bei bis zu 50 Gew.-%, bevorzugt bei bis zu 20 Gew.-%, sehr bevorzugt bei bis zu 5 Gew.-%. Der spezielle Charakter dieses zumindest einen Comonomers zeigt sich darin, dass es zumindest eine Gruppe Y trägt, die mit zumindest einer aus einer Schutzgruppe Z hervorgegangenen Gruppe X, die sich auf der Oberfläche der zumindest einen Füllstoffpartikelsorte B befindet, unter Einwirken thermischer Energie, elektromagnetischer Strahlung, von Partikelstrahlung und/oder Schallenergie während oder nach einer Beschichtung eine Verbindung eingehen kann. Beispiele für Gruppen X, Y und Z sind im Abschnitt "Kombinationen von Gruppen X und Y" beschrieben. Besonders bevorzugt werden Monomere auf Basis von α,β- ungesättigten Estern, die diese Gruppen enthalten, eingesetzt. Es ist auch möglich, dass Gruppen Y über eine polymeranaloge Reaktion mit dem Polymer A an den Stellen, an denen diese speziellen Comonomere eingebaut sind, verbunden werden. Es ist ferner möglich, dass diese speziellen Comonomere vor der Polymerisation mit Gruppen Y derivatisiert werden, d. h. dass Comonomere mit nicht notwendigerweise erfindungsgemäßer Funktionalisierung vor der Polymerisation und damit Herstellung einer Polymersorte vom Typ A mit einer chemischen Baueinheit modifiziert wird, über die zumindest eine erfindungsgemäße Gruppe Y in das Comonomer eingebaut wird und nach dieser Modifikationsreaktion und anschließenden Polymerisation für die Ausbildung einer Verknüpfung auf erfindungsgemäße Weise mit zumindest einer Gruppe X zur Verfügung steht.

Als Beispiele für Comonomere, die funktionelle Gruppen tragen, seien - ohne sich einschränken zu wollen - Allylacrylat, Allylmethacrylat, Tetrahydrofurfurylacrylat, Tetrahydrofurfurylmethacrylat, 2-Hydroxyethylacrylat, 2-Hydroxyethylmethacrylat, 3-Hydroxy-propylacrylat, 3-Hydroxypropylmethacrylat, 4-Hydroxybutylacrylat, 4-Hydroxybutylmeth-acrylat, Glycidylacrylat, Glycidylmethacrylat, acryliertes Benzophenon, methacryliertes Benzophenon, Crotonsäure, Maleinsäure, Maleinsäureanhydrid, Itaconsäure, Itaconsäureanhydrid, 2-Dimethylaminoethylacrylat, 2-Dimethylaminoethylmethacrylat, 3-Dimethylaminopropylacrylat, 3-Dimethylaminopropylmethacrylat, *N*-*tert*-Butylacrylamid, *N*-*tert*-Butylmethacrylamid, *N*-*iso*-Propylacrylamid, *N*-*iso*-Propylmethacrylamid, Acrylamid, Methacrylamid, *N*-Methylolacrylamid, *N*-Methylolmethacrylamid, Acrylsäure, Methacrylsäure, Vinylalkohol, 2-Hydroxyethylvinylether, 3-Hydroxypropylvinylether, 4-Hydroxybutylvinylether und Allylglycidylether genannt.

Stellt die zumindest eine Polymersorte A ein Blockcopolymer dar, dann liegen im einfachsten Fall Diblockcopolymere der Form PA-PA' bestehend aus einem Block PA und einem Block PA', die sich in Bezug auf die ausgewählten Ausgangsmonomere unterscheiden und optional in ihrer Erweichungstemperatur und/oder Molmasse und/oder Struktur (z. B. linearer oder verzweigter Art) verschieden sein können, vor. Weitere Ausführungsformen für Polymere A mit Blockcopolymercharakter sind, ohne sich einschränken zu wollen, Triblockcopolymere der Art PA-PA'-PA", Blockcopolymere der Art PA-PA'-PA"-PA"' sowie höhere Blockcopolymere, deren Strukturen diese Reihe fortführen. Triblockcopolymere und höhere Blockcopolymere sind dann erfindungsgemäß im Sinne der Polymere A mit Blockcopolymercharakter, wenn sich alle direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) unterscheiden. Ferner sind Triblockcopolymere und höhere Blockcopolymere erfindungsgemäß im Sinne der Polymere A, wenn sich mehrere der nicht direkt miteinander verknüpften Blöcke in Bezug auf die ausgewählten Ausgangsmonomere sowie optional in ihrer Molmasse und/oder Erweichungstemperatur und/oder Struktur (z. B. linearer oder verzweigter Art) nicht voneinander unterscheiden. Eine bevorzugte Auslegung eines Polymers A mit Blockcopolymercharakter ist ein Triblockcopolymer der Art PA-PA'-PA", wobei PA und PA" in Bezug auf die ausgewählten Ausgangsmonomere, Molmasse, Erweichungstemperatur und Struktur gleich sind. Die Blockverknüpfung in Polymeren A mit Blockcopolymercharakter kann in einer linearen Form vorliegen, aber auch in einer sternförmigen Ausführung oder als Pfropfcopolymervariante. Jeder einzelne Block kann als Homopolymerblock oder Copolymerblock aufgebaut sein. Damit gelten für die Blöcke die Definitionen, wie sie im Abschnitt "Homopolymere" und "statistische Copolymere" ausgeführt sind.

Kommt als Polymer A ein Blockcopolymer zur Anwendung, dann enthält bevorzugt zumindest eine Blocksorte Funktionalisierungen vom Typ Y. Besonders bevorzugt sind Diblockcopolymere, die in nur einer Blocksorte Funktionalisierungen vom Typ Y enthalten, symmetrische Triblockcopolymere, die nur in beiden Endblöcken Funktionalisierungen vom Typ Y enthalten und Triblockcopolymere, die nur im Mittelblock Funktionalitäten vom Typ Y enthalten.

### Füllstoffpartikel B

Als die zumindest eine Füllstoffpartikelsorte B kommen im Sinne dieser Erfindung bevorzugt solche Füllstoffpartikel zur Anwendung, bei denen die Basiseinheiten ohne Oberflächenmodifikationen Erweichungstemperaturen von größer als 80 °C aufweisen, bevorzugt von größer als 120 °C. Es sind außerdem solche Systeme, deren Erweichungstemperatur (bezogen auf die nicht modifizierten Basiseinheiten) oberhalb der Zersetzungstemperatur liegt, dann erfindungsgemäß, wenn die Zersetzungstemperatur oberhalb 200 °C liegt, bevorzugt oberhalb 500 °C.

Die Materialien, auf denen die Basiseinheit der zumindest einen Füllstoffpartikelsorte B basiert, können anorganischer Natur oder ein anorganisch/organisches Hybridmaterial sein und einen amorphen, teilkristallinen oder kristallinen Charakter aufweisen.

Die Füllstoffpartikel können in ihrer Struktur bevorzugt kugelförmig, stäbchenförmig oder plättchenförmig vorliegen. Separierte Partikel, oftmals auch Primärpartikel genannt, sind dabei ebenso erfindungsgemäß wie aus mehreren Primärpartikeln gebildete Aggregate. Solche Systeme zeigen oft eine fraktale Überstruktur. Werden die Partikel aus Kristalliten gebildet, dann hängt die Primärpartikelform von der Art des Kristallgitters ab. Plättchenförmige Systeme können auch in Form von Schichtstapeln vorliegen.

In einer vorteilhaften Ausführungsform dieser Erfindung liegt die zumindest eine funktionalisierte Füllstoffsorte in der Haftklebemasse im Wesentlichen in Form von singulären kugelförmigen Partikeln vor. Die Partikeldurchmesser weisen dann Werte von kleiner als 2 µm, bevorzugt von kleiner als 250 nm, sehr bevorzugt von kleiner 25 nm auf. In einer weiteren vorteilhaften Auslegung dieser Erfindung liegt die zumindest eine funktionalisierte Füllstoffsorte in der Haftklebemasse im Wesentlichen in Form von singulären plättchenförmigen Partikeln vor. Die Schichtdicke solcher Plättchen weist dann Werte von bevorzugt kleiner als 10 nm und einen größten Durchmesser von bevorzugt kleiner als 1000 nm auf. In einer weiteren vorteilhaften Auslegung dieser Erfindung liegt die zumindest eine Füllstoffsorte in der Haftklebemasse im Wesentlichen in Form von singulären stäbchenförmigen Partikeln vor. In diesem Fall weisen diese Stäbchen einen Durchmesser von kleiner als 100 nm und eine Länge von kleiner als 15 µm auf. Die Stäbchen können auch gekrümmt vorliegen und/oder flexibel sein. Weiterhin ist es im Sinne dieser Erfindung vorteilhaft möglich, dass die zumindest eine Füllstoffsorte in der Haftklebemasse in Form von Primärpartikelaggregaten vorliegt. Diese Aggregate weisen einen Gyrationsradius (zu verstehen analog dem von Polymeren bekannten Terminus "Gyrationsradius") von kleiner als 1000 nm, bevorzugt von kleiner als 250 nm auf. Besonders bevorzugt werden solche Füllstoffpartikel im Sinne dieser Erfindung eingesetzt, deren räumliche Ausdehnung in zumindest einer Richtung kleiner als 250 nm ist, bevorzugt kleiner als 100 nm, sehr bevorzugt kleiner als 50 nm. Es ist außerdem im Sinne dieser Erfindung möglich, Kombinationen aus den zuvor genannten Füllstoffarten einzusetzen.

In einer besonders vorteilhaften Ausführung dieser Erfindung liegen die zuvor beschriebenen Partikel oder Partikelaggregate als stabile Dispersion vor, wodurch sich die Verarbeitung bedeutend vereinfacht. Das Dispersionsmedium können dabei sein - ohne sich einschränken zu wollen - Wasser, organische Lösungsmittel wie z. B. Ethanol, Isopropanol, Aceton, Methylethylketon, Methylisobutylketon, Toluol, Xylol, Reaktivsysteme wie die zuvor beschriebenen Monomere zur Herstellung der Haftklebemassen oder ein polymeres Bindemittel.

Die funktionalisierten Partikeln können unterschiedliche Morpholkogien besitzen; insbesondere vorteilhaft lassen sich sphärische, stäbchenförmige und/oder plättchenförmige Partikeln und/oder Aggregate aus den vorgenannten Erscheinungsformen einsetzen. Insbesondere vorteilhafte Ergebnisse ließen sich mit Aggregaten erzielen.

Typische und erfindungsgemäß vorteilhafte Verbindungsklassen, aus denen die Basiseinheit der zumindest einen Füllstoffpartikelsorte B besteht, sind Oxide anorganischer Natur - insbesondere Metalloxide und/oder Halbmetalloxide -, Salze der Erdalkalimetalle sowie Minerale auf Silikatbasis, insbesondere Tonminerale und Tone. Zu den erfindungsgemäß einsetzbaren amorphen oder kristallinen Metalloxiden zählen zum Beispiel Siliziumdioxid (als Feststoff: z. B. DEGUSSA AG, Aerosil^{®}; CABOT, CAB-O-SIL^{®}; in Dispersion z. B. CLARIANT INTERNATIONAL AG, Highlink^{®}; DEGUSSA AG, Aerosil^{®}; NISSAN CHEMICAL AMERICA CORPORATION, Organosilicasol^{™}; BYK CHEMIE GMBH, Nanobyk^{®}; HANSE CHEMIE, Nanocryl^{®}; CABOT, CAB-O-SPERSE^{®}), Aluminiumoxid (z. B. DEGUSSA AG, Aeroxide^{®}), Titandioxid, Zirkoniumdioxid (z. B. BYK CHEMIE GMBH, Nanobyk^{®}) und Zinkoxid (z. B. UMICORE, Zano^{®}). Dem Fachmann sind weitere Systeme geläufig, die ebenso erfindungsgemäß eingesetzt werden können. Erdalkalimetallsalze umfassen beispielsweise Carbonate, Sulfate, Hydroxide, Phosphate und Hydrogenphosphate des Magnesiums, des Calciums, des Strontiums und des Bariums. Zu den erfindungsgemäß einsetzbaren Tonmineralen und Tonen zählen insbesondere silikatische Systeme wie Serpentine, Kaoline (z. B HOFFMANN MINERAL GMBH, Silitin^{®}, Aktisil^{®} (Mischung aus Quarz und Kaolinit)), Talkum, Pyrophyllit, Smectite wie insbesondere Montmorillonit (z. B. SÜD-CHEMIE, Nanofil^{®} und Cloiste^{®} der Fa. SOUTHERN CLAY PRODUCTS, INC.), Vermiculite, Illite, Glimmer, Sprödglimmer, Chlorite, Sepiolith und Palygorskit. Weiterhin können synthetische Tonminerale wie Hectorite sowie deren verwandte Systeme wie z. B. Laponite^{®} der Fa. ROCKWOOD HOLDINGS INC. und Fluorhectorite sowie deren verwandte Systeme wie z. B. Somasif^{®} der Fa. CO-OP erfindungsgemäß eingesetzt werden.

Die zumindest eine Füllstoffpartikelsorte B liegt oberflächenmodifiziert vor. Typische und erfindungsgemäß vorteilhafte Oberflächenmodifikationsreagenzien sind Organosilane (z. B WACKER-CHEMIE GMBH, Geniosil^{®}, DEGUSSA AG, Dynasylan^{®}, GE SILICONES, Silquest^{®}; GELEST, INC.) und Tenside, aber auch Organotitan-Verbindungen (z. B. DUPONT, Tyzor^{®}; KENRICH PETROCHEMICALS, INC., Lica^{®}), Fettsäuren oder Polyelektrolyte wie beispielsweise kurzkettige Polymere mit hohem Acrylsäureanteil. Die Funktion dieser Oberflächenmodifikationsreagenzien besteht vor allem darin, Kompatibilität der Partikeloberfläche mit der Matrix, in der sie dispergiert werden sollen, zu schaffen. Als weitere Aufgabe werden Oberflächenmodifikationsreagenzien eingesetzt, um Zusammenlagerungen kleinerer Partikel zu größeren Objekten zu verhindern. Sehr vorteilhaft im erfindungsgemäßen Sinne wird zumindest eine Sorte an Oberflächenmodifikationsreagenzien eingesetzt, die zusätzlich zu der kompatibilisierenden und aggregationsverhindernden Funktion auch die Möglichkeit bietet, über zumindest eine Gruppe X, die in der zumindest einen Sorte des Oberflächenmodifikationsreagenzes eingebaut ist, eine Verbindung mit dem Polymer A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung einzugehen. Die Gruppe X liegt zunächst in blockierter oder desaktivierter Form als Gruppe vom Typ Z vor, welche an sich nicht zu einer Vernetzungsreaktion mit der zumindest einen Polymersorte A und/oder einer im Polymer A enthaltenden Gruppe Y befähigt ist und erst durch äußere Aktivierung durch Zerfall oder andere chemische Reaktionen in die Gruppe X umgewandelt wird. Bei den äußeren Einflüssen zur Aktivierung dieser Umwandlung kann es sich ebenfalls um thermische Energie, elektromagnetische Strahlung, Partikelstrahlung und/oder Schallenergie handeln. Vorteilhaft ist hierbei die thermische Aktivierung, wobei in einer besonders vorteilhaften Form der Gruppe Z die Aktivierungstemperatur oberhalb oder gleich der Prozesstemperatur liegt, so dass die Vernetzung erst nach der Beschichtung losgeht. Ein Füllstoffpartikel trägt an seiner Oberfläche bevorzugt mindestens 10 Gruppen der zumindest einen Sorte Z, mehr bevorzugt mindestens 50.

In einer vorteilhaften Ausführungsform des erfindungsgemäßen Verfahrens weisen die funktionalisierten Partikeln auf denselben Basiseinheiten, auf denen die funktionellen Gruppen Z vorgesehen sind, und/oder auf weiteren nichtpolymeren Basiseinheiten weiterhin funktionelle Gruppen Xₐ auf, wobei die Gruppen Xₐ in der Lage sind, unter geeigneten Verfahrensbedingungen eine Reaktion mit den reaktiven Zentren, insbesondere den funktionellen Gruppen Y des Polymers einzugehen, und wobei in dem Verfahren bereits vor der Umwandlung der Gruppen Z in die Gruppen X ein Vernetzungsschritt stattfindet, der die Reaktion der funktionellen Gruppen Xₐ mit den reaktiven Zentren, insbesondere den funktionellen Gruppen Y des Polymers umfasst.

Eine weitere erfindungsgemäß vorteilhafte Ausführung der oberflächenmodifizierten Füllstoffsorte B ergibt sich durch eine Kombination der Oberflächenmodifikationsreagenzien, wobei eine Sorte mindestens eine funktionelle Gruppe Z beinhaltet, die nach Aktivierung durch thermische Energie, elektromagnetische Strahlung, Partikelstrahlung und/oder Schallenergie zu der Gruppe X zerfällt oder chemisch umgewandelt wird, und eine andere Sorte mindestens eine Sorte Xₐ enthält, die sich von der funktionellen Gruppe vom Typ X sowohl chemisch unterscheidet als auch nach einem anderen Reaktionsmechanismus zur Vernetzung mit dem Polymer der Sorte A beiträgt. Die Vernetzungsreaktion kann dabei durch thermische Energie, elektromagnetische Strahlung, Partikelstrahlung und/oder Schallenergie initiiert werden, wobei die funktionellen Gruppen X und Xₐ nicht durch dieselben äußeren Stimuli aktiviert werden, wodurch sich die Möglichkeit zur Formulierung einer Haftklebemasse mit einem dual-cure-System ergibt. So ist es z. B. möglich mit zwei Sorten Gruppen X und Xₐ mit unterschiedlichen Reaktivitäten und/oder Aktivierungsmechanismus zunächst Oligomere oder Polymere anzuvernetzen, so dass eine spezieller Viskositätsbereich erlangt wird, der die Verarbeitung vereinfacht, und nach der Beschichtung eine Nachhärtungsreaktion zu starten.

Füllstoffpartikel, die in ihrer nativen Form (in Form der nicht oberflächenmodifizierten Basiseinheit) an der Oberfläche Hydroxidgruppen enthalten, bieten bevorzugt die Möglichkeit einer Reaktion mit Chlorsilanen oder Alkoxysilanen. Im Anschluss an eine Hydrolyse des Silans findet eine Kondensation von Silanolgruppen mit den Hydroxidgruppen auf der Partikeloberfläche statt. Stellt zumindest ein Substituent am zentralen Siliziumatom des Silans einen organischen Rest dar, wird bei kompletter Oberflächenbedeckung mit Silanmolekülen auf diese Weise ein organophiler Mantel kovalent mit dem Füllstoffpartikel verknüpft und damit die Partikel polymermatrixkompatibel ausgestattet. Die Konzepte und typischerweise verwendete Materialklassen, die im Sinne dieser Erfindung eingesetzt werden können, werden z. B. von R. N. Rothon beschrieben [R. N. Rothon (Hrsg.), "Particulate-Filled Polymer Composites", 2. Aufl., 2003, Rapra Technology, Shawbury, 153-206].

Zwei Klassen an Silanen können im Sinne dieser Erfindung insbesondere unterschieden werden, zum einen solche, die neben den Gruppen, die zu einer Reaktion mit der Basisoberfläche befähigt sind, ausschließlich organische Reste tragen, die chemisch inert sind (siehe Struktur II), zum anderen solche, die neben den Gruppen, die zu einer Reaktion mit der Basisoberfläche befähigt sind, zumindest einen organischen Rest enthalten, der zumindest eine Gruppe X oder Z trägt, die direkt und/oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann (siehe Struktur III). In Silan II stellt zumindest einer der Substituenten A, B, D eine hydrolysierbare Gruppe dar, also zum Beispiel ein Chloratom oder eine Alkoxygruppe. Zumindest einer der Substituenten B, C, D stellt einen organischen Rest dar, der aus einem linearen, verzweigten oder ringförmigen Kohlenwasserstoff besteht, der auch aromatisch sein kann und niedermolekularer, oligomerer oder polymerer Natur. Ist mehr als eine hydrolysierbare Gruppe unter den Substituenten A, B, D vorhanden, dann können diese gleicher oder verschiedener chemischer Natur sein, wobei alle der obigen Definition für hydrolysierbare Gruppen entsprechen. Ist mehr als ein organischer Rest unter den Substituenten B, C, D, dann können diese ebenfalls gleicher oder verschiedener chemischer Natur sein, wobei alle der obigen Definition für organische Reste entsprechen. In Silan III stellt zumindest einer der Substituenten A, E, F eine hydrolysierbare Gruppe dar, also zum Beispiel ein Chloratom oder eine Alkoxygruppe. Zumindest einer der Substituenten E, F, G stellt einen organischen Rest dar, der aus einem linearen, verzweigten oder ringförmigen Kohlenwasserstoff besteht, der auch aromatisch sein kann und niedermolekularer, oligomerer oder polymerer Natur und der zusätzlich zumindest eine Gruppe X oder Z enthält, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann. Ist mehr als eine hydrolysierbare Gruppe unter den Substituenten A, E, F vorhanden, dann können diese gleicher oder verschiedener chemischer Natur sein. Ist mehr als ein organischer Rest unter den Substituenten E, F, G vorhanden, dann können diese ebenfalls gleicher oder verschiedener chemischer Natur sein, wobei alle der obigen Definition für organische Reste entsprechen.

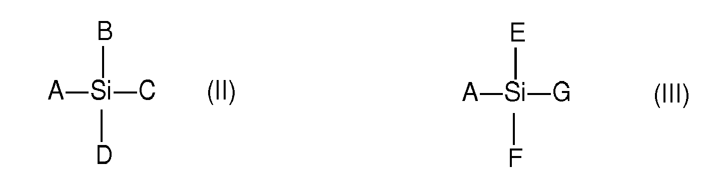

Vorteilhafte Auslegungen erfindungsgemäß einsetzbarer Silane der Struktur II sind solche, bei denen lediglich A als hydrolysierbare Gruppe zum Einsatz kommt und B, C, D organische Reste sind, von denen B und D gleicher chemischer Natur sind und C eine andere chemische Natur aufweist. Weitere vorteilhafte Ausgestaltungen erfindungsgemäß einsetzbarer Silane der Struktur II sind solche, bei denen A und B als hydrolysierbare Gruppen gleicher chemischer Natur zum Einsatz kommen und C und D organische Reste sind, die gleicher chemischer Natur sind. Weitere vorteilhafte Ausgestaltungen erfindungsgemäß einsetzbarer Silane der Struktur II sind solche, bei denen A, B, D als hydrolysierbare Gruppen gleicher chemischer Natur zum Einsatz kommen und C ein organischer Rest ist.

Vorteilhafte Ausgestaltungen erfindungsgemäß einsetzbarer Silane der Struktur III sind solche, bei denen lediglich A als hydrolysierbare Gruppe zum Einsatz kommt und E, F, G organische Reste sind, von denen E und F gleicher chemischer Natur sind und G anderer chemischer Natur ist. G enthält die zumindest eine Gruppe X oder Z, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann. Weitere vorteilhafte Ausgestaltungen erfindungsgemäß einsetzbarer Silane der Struktur III sind solche, bei denen A, E, F als hydrolysierbare Gruppen gleicher chemischer Natur zum Einsatz kommen und G ein organischer Rest ist, der die zumindest eine Gruppe X oder Z, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann, enthält.

Hydrolysierbare Gruppen A, B, D, E, F, die in Silanen II und Silanen III vorteilhaft zum Einsatz kommen können, sind Halogenatome, insbesondere Chlor, und/oder Alkoxygruppen, wie beispielsweise Methoxy-, Ethoxy-, n-Propoxy-, *iso*-Propoxy-, n-Butoxy-, sec-Butoxy- oder *tert*-Butoxygruppen. Ferner sind Acetoxygruppen einsetzbar. Die weiteren, dem Fachmann bekannten Beispiele für hydrolysierbare Gruppen sind im Sinne dieser Erfindung ebenfalls einsetzbar.

Zu den organischen Resten B, C, D, E, F, die in Silanen II und Silanen III zum Einsatz kommen können, zählen beispielsweise, ohne Anspruch auf Vollständigkeit zu erheben, Methyl-, Ethyl-, n-Propyl-, *iso*-Propyl-, n-Butyl-, sec-Butyl-, *tert*-Butylgruppen, Pentylgruppen sowie die verzweigten Isomere, Hexylgruppen sowie die verzweigten Isomere, Heptylgruppen sowie die verzweigten Isomere, Octylgruppen sowie die verzweigten Isomere, Nonylgruppen sowie die verzweigten Isomere, Decylgruppen sowie die verzweigten Isomere, Undecylgruppen sowie die verzweigten Isomere, Dodecylgruppen sowie die verzweigten Isomere, Tetradecylgruppen sowie die verzweigten Isomere, Hexadecylgruppen sowie die verzweigten Isomere, Octadecylgruppen sowie die verzweigten Isomere sowie Eicosylgruppen sowie die verzweigten Isomere. Die erfindungsgemäßen organischen Reste können zudem ringförmige und/oder aromatische Bauelemente enthalten. Repräsentative Strukturen sind Cyclohexyl-, Phenyl- und Benzylgruppen. Es ist ferner erfindungsgemäß, wenn als zumindest ein organischer Rest Oligomere oder Polymere eingesetzt werden, die zumindest eine hydrolysierbare Silylgruppe enthalten.

Zu den organischen Resten E, F, G, in dem zumindest eine Gruppe X oder Z, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann, enthalten ist, zählen beispielsweise die in der folgenden Liste zusammengestellten Verbindungen (die Liste erhebt keinen Anspruch auf Vollständigkeit): Methyl, Ethyl-, n-Propyl-, iso-Propyl-, n-Butyl-, sec-Butyl-, *tert*-Butylgruppen, Pentylgruppen sowie die verzweigten Isomere, Hexylgruppen sowie die verzweigten Isomere, Heptylgruppen sowie die verzweigten Isomere, Octylgruppen sowie die verzweigten Isomere, Nonylgruppen sowie die verzweigten Isomere, Decylgruppen sowie die verzweigten Isomere, Undecylgruppen sowie die verzweigten Isomere, Dodecylgruppen sowie die verzweigten Isomere, Tetradecylgruppen sowie die verzweigten Isomere, Hexadecylgruppen sowie die verzweigten Isomere, Octadecylgruppen sowie die verzweigten Isomere und Eicosylgruppen sowie die verzweigten Isomere. Die erfindungsgemäßen organischen Reste können zudem ringförmige und/oder aromatische Bauteile enthalten. Repräsentative Strukturen sind Cyclohexyl-, Phenyl- und Benzylgruppen. Es ist ferner erfindungsgemäß, wenn als zumindest ein organischer Rest Oligomere oder Polymere eingesetzt werden, die zumindest eine hydrolysierbare Silylgruppe enthalten. Kommen als einer oder mehrere der Reste E, F, G ein Rest der obigen Liste zur Anwendung, dann ist dieser zusätzlich durch ein chemisches Bauelement, das zumindest eine Gruppe Z oder X enthält, modifiziert.

Im Sinne dieser Erfindung bevorzugt einsetzbare Beispiele für Silane mit Struktur II sind Methyltrimethoxysilan, Methyltriethoxysilan, Dimethyldimethoxysilan, Dimethyldiethoxysilan, Trimethylethoxysilan, Ethyltrimethoxysilan, Propyltrimethoxysilan, Propyltriethoxysilan,

iso-Butyltrimethoxysilan, *iso*-Butyltriethoxysilan, Octyltrimethoxysilan, Octyltriethoxysilan, *iso*-Octyltrimethoxysilan, iso-Octyltriethoxysilan, Hexadecyltrimethoxysilan, Hexadecyltriethoxysilan, Octadecylmethyldimethoxysilan, Phenyltrimethoxysilan, Phenyltriethoxysilan, Cyclohexylmethyldimethoxysilan, Dicyclopentyldimethoxysilan, (Heptadecafluor-1,1,2,2-tetrahydrodecyl)triethoxysilan, (3,3,3-Trifluorpropyl)trimethoxysilan.

Ein Beispiel für silylfunktionalisierte Oligomere oder Polymere, die erfindungsgemäß zum Einsatz kommen können, ist Polyethylenglykol, das mit einer Trimethoxysilan-Gruppe verknüpft ist.

Im Sinne dieser Erfindung besonders bevorzugt einsetzbare Vertreter der Silane mit Struktur III, die zumindest eine Funktionalisierung tragen, sind beispielsweise *N*-(2-Aminoethyl)-3-aminopropyltrimethoxysilan, *N*-(2-Aminoethyl)-3-aminopropyltriethoxysilan, 3-Aminopropyltrimethoxysilan, (3-Trimethoxysilylpropyl)diethylentriamin, 3-Aminopropyltriethoxysilan, 3-Aminopropyldiethoxymethylsilan, N-(2-Aminoethyl)-3-aminopropyldimethoxymethylsilan, (*N*-Butyl)-3-aminopropyltrimethoxysilan, 3-(*N-*Ethylamino)-2-methylpropyltrimethoxysilan, 4-Amino-3,3-dimethylbutyldimethoxymethylsilan, (N-Cyclohexyl)-aminomethyldimethoxymethylsilan, (*N*-Cyclohexyl)-aminomethyltrimethoxysilan, (*N*-Phenyl)-3-aminopropyltrimethoxysilan, (*N*-Benzyl-2-aminoethyl)-3-aminopropyltrimethoxysilan, [2-(*N*-Benzyl-*N-*vinylamino)-ethyl]-3-aminopropyltrimethoxysilan Hydrogenchlorid, [2-(*N*-Benzyl-*N*-vinylamino)-ethyl]-3-aminopropyltrimethoxysilan, Bis-(3-propyltriethoxysilyl)amin, Aminophenyltrimethoxysilan (meta- oder para-), 2-(4-Pyridylethyl)triethoxysilan, N-(3-Trimethoxysilylpropyl)pyrrol, *N*-(3-Triethoxysilylpropyl)-4,5-dihydroimidazol, 2,2-Dimethoxy-1,6-diaza-2-silacyclooctan, *N*-Allyl-aza-2,2-dimethoxysilacyclopentan, 3-Ureidopropyltriethoxysilan, 3-Isocyanatopropyltriethoxysilan, Isocyanatomethyltrimethoxysilan, Isocyanatomethyldimethoxymethylsilan, Tris-[3-(trimethoxysilyl)-propyl]-isocyanurat, 6-Azidosulfonylhexyltriethoxysilan, Triethoxysilylpropylethylcarbamat, (3-Triethoxysilylpropyl)-*tert-*butylcarbamat, Vinyltrimethoxysilan, Vinyltriethoxysilan, Vinyl-tri(2-methoxyethoxy)silan, Vinyltrüsopropoxysilan, Vinyldimethoxymethylsilan, Vinyltriacetoxysilan, 3-Triethoxysilylpropylbernsteinsäureanhydrid, 3-Glycidyloxypropyltriethoxysilan, 2-(3,4-Epoxycyclohexyl)-ethyltriethoxysilan, 3-Glycidyloxypropyldiethoxymethylsilan, 3-Methacryloyloxypropyltriethoxysilan, 3-Chloropropyltriethoxysilan, Bis(2-Hydroxyethyl)-3-aminopropyltriethoxysilan, 2-Hydroxy-4-(3-triethoxysilylpropoxy)-benzophenon, 4-(3'-Chlorodimethylsilylpropoxy)-benzophenon, 3-Mercaptopropyltrimethoxysilan, Bis-(3-triethoxysilylpropyl)-disulfan, Bis-(3-triethoxysilylpropyl)-tetrasulfan, Bis-(triethoxysilylpropyl)-polysulfan, Triethoxysilylbutyraldehyd, Bisphenylphosphinoethyldimethylethoxysilan, Octadecylaminodimethyltrimethoxysilylpropylammoniumchlorid.

Silane, die in WO 00/43539 durch Biochip Technologies oder in EP 281 941 B1 durch Ciba Geigy offenbart werden, und solche, die von Kolar et al. publiziert wurden [A. Kolar, H. F. Gruber, G. Greber, JMS Pure Appl. Chem. 1994, A31, 305-318], können ebenfalls im Sinne dieser Erfindung als Silane mit der Struktur III eingesetzt werden. Ebenso können Organotitan- und Organozirkoniumverbindungen eingesetzt werden, wobei dies optional in Verbindung mit Silanen geschehen kann.

Die Oberflächenmodifikation kann vollständig durch zumindest einen Vertreter der Silane III geschehen. Es ist aber auch möglich, eine Kombination aus Silanen III und Silanen II zu verwenden. Eine solche Kombination ist dann erfindungsgemäß, wenn zumindest 1 Gew.-%, bevorzugt zumindest 5 Gew.-% zumindest eines Vertreters der Silane III eingesetzt werden.

Silane werden besonders bevorzugt im Sinne dieser Erfindung als Oberflächenmodifikatoren eingesetzt, wenn Füllstoffpartikel zur Anwendung kommen, die zumindest im Zustand der nicht oberflächenmodifizierten Basiseinheit an der Oberfläche Hydroxygruppen tragen. Beispiele für solche Füllstoffpartikelsorten sind Metalloxide, insbesondere amorphes Siliziumdioxid. Eine beispielhafte Möglichkeit, eine Oberflächenmodifikation zu realisieren, geben Bauer und Kollegen [F. Bauer, H. Ernst, U. Decker, M. Findeisen, H.-J. Gläsel, H. Langguth, E. Hartmann, R. Mehnert, C. Peuker, Macromol. Chem. Phys. 2000, 201, 2654-2659] und Rothon [R. N. Rothon (Hrsg.), Particulate Filled Polymer Composites, 2. Aufl., 2003, Rapra Technology, Shawbury, pp. 153-206].

Partikel, die im Zustand der nicht oberflächenmodifizierten Basiseinheit an der Oberfläche ionische Gruppen tragen, lassen sich bevorzugt mit Tensiden und/oder Fettsäuren modifizieren.

Als Tenside können generell alle quaternären Ammoniumverbindungen, protonierten Amine, organischen Phosphoniumionen und Aminocarbonsäuren zum Einsatz kommen, die ein amphiphiles Verhalten zeigen. Vorteilhaft lassen sich Ammoniumverbindungen einsetzen, die zumindest drei organische Reste tragen, wie beispielsweise Alkylammoniumsalze, Trimethylalkylammoniumsalze, Dimethyldialkylammoniumsalze, Methylbenzyldialkyl-ammoniumsalze, Dimethylbenzylalkylammoniumsalze oder Alkylpyridiniumsalze. Es können ferner alkoxylierte quaternäre Ammoniumverbindungen zum Einsatz kommen.

Zwei Klassen an Tensiden können im Sinne dieser Erfindung unterschieden werden, zum einen solche, die neben den Gruppen, die zu einer Wechselwirkung mit der Basisoberfläche befähigt sind, ausschließlich organische Reste tragen, die chemisch inert sind (siehe Struktur IV), zum anderen solche, die neben den Gruppen, die zu einer Verknüpfung mit der Basisoberfläche befähigt sind, zumindest einen organischen Rest enthalten, der zumindest eine Gruppe X oder Z trägt, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann (siehe Struktur V). In Tensid IV können die Substituenten A, B, D unabhängig voneinander organische Reste oder Wasserstoff sein, der Substituent C ist ein langkettiger organischer Rest. Als Gegenionen können beliebige Anionen zum Einsatz kommen. Beispiele sind Chlorid, Bromid, Hydrogensulfat, Dihydrogenphosphat und Tetrafluorborat. Dem Fachmann sind weitere bekannt, die ebenfalls im Sinne dieser Erfindung eingesetzt werden können. Die organischen Reste können unabhängig voneinander linear oder verzweigt sein, gesättigt oder ungesättigt vorliegen, aus aliphatischen, olefinischen und/oder aromatischen Elementen aufgebaut sein und 1 bis 22 Kohlenstoffatome enthalten. Typische Substituenten, die als organische Reste verwendet werden, umfassen Methylgruppen, Ethylgruppen, n-Propylgruppen, iso-Propylgruppen, n-Butylgruppen, sec-Butylgruppen, *tert*-Butylgruppen, lineare oder verzweigte Pentylgruppen, lineare oder verzweigte Hexylgruppen, lineare oder verzweigte Heptylgruppen, lineare oder verzweigte Octylgruppen, Benzylgruppen oder Gruppen mit höheren Anzahlen an Kohlenstoffatomen. Als langkettige organische Reste kommen bevorzugt Dodecylgruppen, Tetradecylgruppen, Hexadecylgruppen, Octadecylgruppen oder Eicosylgruppen in gesättigter oder ungesättigter Form zum Einsatz. Da es sich bei den Edukten der Tensidherstellung häufig um Naturprodukte handelt, findet man nur selten kettenreine Alkylsubstituenten. Vielmehr liegt häufig ein Gemisch verschieden langer Alkylketten vor. Besonders bevorzugt als langkettige organische Reste werden Talgreste (ungesättigt) oder hydrierte Talgreste (gesättigt) eingesetzt. Es ist außerdem erfindungsgemäß, dass die Tensidfunktion durch Oligomere oder Polymere übernommen wird, die so funktionalisiert sind, dass sie zumindest eine kationische Gruppe tragen.

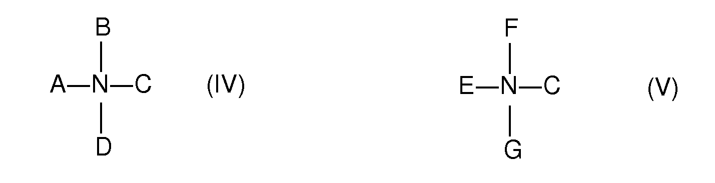

Beispiele, die bevorzugt im Sinne dieser Erfindung als Tenside der Struktur IV eingesetzt werden können, sind Hexadecyltrimethylammoniumchlorid oder -bromid, Methylditalgammoniumchlorid oder -bromid, wobei die Talgreste gesättigt oder ungesättigt vorliegen können, Dimethyltalgbenzylammoniumchlorid oder -bromid, wobei die Talgreste gesättigt oder ungesättigt vorliegen können, Dimethyltalg-(2-ethylhexyl)-ammoniumchlorid oder -bromid, wobei die Talgreste gesättigt oder ungesättigt vorliegen können, Dimethylditalgammoniumchlorid oder -bromid, wobei die Talgreste gesättigt oder ungesättigt vorliegen können.

Tenside, die in EP 900 260 B1 durch Akzo Nobel, US 5,739,087 durch Southern Clay, US 5,718,841 durch Rheox, US 4,141,841 durch Procter & Gamble und durch H. Großmann [H. Großmann in Katalysatoren, Tenside und Mineralöladditive, H. Falbe, U. Hasserodt (Hrsg.), 1978, G. Thieme, Stuttgart, S. 135ff] offenbart werden, können ebenfalls im Sinne dieser Erfindung als Tenside mit der Struktur IV eingesetzt werden.

Vorteilhafte Auslegungen erfindungsgemäß einsetzbarer Tenside der Struktur V sind solche, bei denen die Substituenten E, F, G unabhängig voneinander organische Reste oder Wasserstoff sein können und der Substituent C ein langkettiger organischer Rest ist. Als Gegenionen können beliebige Anionen zum Einsatz kommen. Beispiele sind Chlorid, Bromid, Hydrogensulfat, Dihydrogenphosphat und Tetrafluorborat. Die organischen Reste können unabhängig voneinander linear oder verzweigt sein, gesättigt oder ungesättigt vorliegen, aus aliphatischen, olefinischen und/oder aromatischen Elemente aufgebaut sein und 1 bis 22 Kohlenstoffatome enthalten. Typische Substituenten, die als organische Reste verwendet werden, umfassen Methylgruppen, Ethylgruppen, n-Propylgruppen, iso-Propylgruppen, n-Butylgruppen, sec-Butylgruppen, *tert*-Butylgruppen, lineare oder verzweigte Pentylgruppen, lineare oder verzweigte Hexylgruppen, lineare oder verzweigte Heptylgruppen, lineare oder verzweigte Octylgruppen, Benzylgruppen oder Gruppen mit höheren Anzahlen an Kohlenstoffatomen. Als langkettige organische Reste kommen bevorzugt Dodecylgruppen, Tetradecylgruppen, Hexadecylgruppen, Octadecylgruppen oder Eicosylgruppen in gesättigter oder ungesättigter Form zum Einsatz. Auch bei den Edukten der Herstellung der Tenside V werden häufig Naturprodukte eingesetzt, so dass selten kettenreine Alkylsubstituenten, sondern ein Gemisch verschieden langer Alkylketten vorliegt. Besonders bevorzugt als langkettige organische Reste werden Talgreste (ungesättigt) oder hydrierte Talgreste (gesättigt) eingesetzt. Es ist außerdem erfindungsgemäß, dass die Tensidfunktion durch Oligomere oder Polymere übernommen wird, die so funktionalisiert sind, dass sie zumindest eine kationische Gruppe tragen. Bei den Tensiden V enthält zumindest einer der Substituenten E, F, G, C zumindest eine Gruppe X oder Z, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann. Tenside, die in EP 900 260 B1 durch Akzo Nobel, US 5,739,087 durch Southern Clay, US 5,718,841 durch Rheox, US 4,141,841 durch Procter & Gamble und durch H. Großmann [H. Großmann in Katalysatoren, Tenside und Mineralöladditive, H. Falbe, U. Hasserodt (Hrsg.), 1978, G. Thieme, Stuttgart, S. 135ff] offenbart werden, können ebenfalls im Sinne dieser Erfindung als Tenside mit der Struktur V eingesetzt werden, solange sie mit zumindest einer Gruppe X oder Z unter Umständen auch zusätzlich zur offenbarten Struktur modifiziert sind.

Beispiele, die bevorzugt im Sinne dieser Erfindung als Tenside der Struktur V eingesetzt werden können, sind Methyltalg-di-(2-hydroxyethyl)-ammoniumchlorid oder -bromid, Allyldimethyltetradecylchlorid oder -bromid, Allyldimethylhexadecylammoniumchlorid oder -bromid, Allyldimethyloctadecylammoniumchlorid oder -bromid.

Im Sinne dieser Erfindung ist es bevorzugt möglich, eine Kombination von Tensiden IV und Tensiden V einzusetzen. In dieser Auslegungsform der Erfindung sind Vertreter der Tenside V zu mindestens 1 Gew.-%, bevorzugt zu mindestens 5 Gew.-% unter allen eingesetzten Tensiden enthalten. Ferner können Tenside IV oder V in Kombination mit kationischen Verbindungen eingesetzt werden, die selbst keine Tenside sind, aber zumindest eine Gruppe X oder Z tragen, die direkt oder nach Aktivierung eine Verbindung mit dem Polymer der Sorte A und/oder zumindest einer Gruppe Y, die in zumindest einer Polymersorte A enthalten ist, unter Einwirkung thermischer Energie, elektromagnetischer Strahlung, von Partikelstrahlung und/oder Schallenergie während oder nach einer Beschichtung eingehen kann. Zumindest 1 Gew.-%, bevorzugt zumindest 5 Gew.-% einer solchen kationischen Verbindung werden erfindungsgemäß in Kombination mit Tensiden IV und/oder V eingesetzt. Kommen solche kationischen Verbindungen zum Einsatz, dann beträgt die Summe an eingesetzten Tensiden IV und Tensiden V höchstens 99 Gew.-%, bevorzugt höchstens 95 Gew.-% beträgt, wobei Tenside V vollständig durch Tenside IV ersetzt sein können. Beispiele für solche kationischen Verbindungen sind (2-Acryloyloxyethyl)(4-benzoylbenzyl)-dimethylammoniumchlorid oder -bromid, 3-Trimethylammoniumpropylmethacrylamid Chlorid oder Bromid, 2-Trimethylammoniumethylmethacrylat Chlorid oder Bromid, 3-Dimethylalkylammoniumpropylmethacrylamid Chlorid oder Bromid, 2-Dimethylalkylammoniummethylmethacrylat Chlorid oder Bromid.

Tenside werden besonders bevorzugt im Sinne dieser Erfindung eingesetzt, wenn Füllstoffpartikel zur Anwendung kommen, die an der Oberfläche (im Zustand der nicht oberflächenmodifizierten Basiseinheit) negative Ladungen oder Teilladungen aufweisen. Beispiele für solche Füllstoffpartikelsorten sind einige Tonminerale, insbesondere Smectite, bei denen interkalierte Kationen durch Tenside ausgetauscht werden können. Ein Prinzip, wie ein solcher Austausch erfolgen kann, formuliert Lagaly [G. Lagaly in Tonminerale und Tone, K. Jasmund, G. Lagaly (Hrsg.), 1993, Steinkopff, Darmstadt, S. 366ff].

Es können ferner Kombinationen erfindungsgemäßer Silane und erfindungsgemäßer Tenside verwendet werden. Zumindest eine der eingesetzten Oberflächenmodifikationsreagenzien enthält zumindest eine Gruppe Z, die durch thermische Energie, elektromagnetische Strahlung, Partikelstrahlung und/oder Schallenergie in die Gruppe X zerfällt oder chemisch umgewandelt wird, die in der Lage ist, direkt mit dem Polymer der Sorte A und/oder zumindest einer Gruppe Y, die in der Polymersorte A vorhanden ist, unter Einwirkung von ebenfalls thermischer Energie, elektromagnetischer Strahlung, von Partikelstrahlung und/oder Schallenergie während oder nach einer Beschichtung eine Verbindung einzugehen, wobei im Fall der thermischen Aktivierung der Gruppe Z sowie der Vernetzungsreaktion der Gruppe X die Aktivierungstemperatur oberhalb oder gleich der Prozesstemperatur liegt.

### Weitere Bestandteile

Es ist außerdem erfindungsgemäß, optional Polymere C, die zumindest eine Gruppe vom Typ Z enthalten, und/oder Polymere C, die zumindest eine Gruppe Z und zumindest eine Gruppe vom Typ X enthalten, und/oder Polymere C, die zumindest eine Gruppe Z und zumindest eine Gruppe vom Typ X und Typ Y enthalten und/oder Polymere C, die weder Gruppen vom Typ Z oder X noch vom Typ Y tragen, einzusetzen. Für die Zusammensetzung jener optional einsetzbaren Polymere, die keine Gruppen vom Typ X, Y oder Z enthalten, gelten die gleichen Angaben hinsichtlich Aufbau, Zusammensetzung, Wahl der Monomere, Erweichungstemperatur und Struktur, wie sie in der Definition für die Polymere A zu finden sind, abgesehen von den Angaben, die dort im Hinblick auf die Gruppen Y gemacht sind. Für optional einsetzbare Polymere, die zumindest eine Gruppe Z und/oder X enthalten, gelten die Angaben, die für Polymere A gemacht wurden, jedoch enthalten solche Polymere C Gruppen der Sorte Z und/oder X und nicht Gruppen der Sorte Y und können daher direkt oder durch Aktivierung mit dem Polymer der Sorte A und/oder zumindest einer Gruppe Y des zumindest einen Polymers der Sorte A durch Einwirken thermischer Energie, elektromagnetischer Strahlung, von Partikelstrahlung und/oder Schallenergie während oder nach einer Beschichtung eine Verbindung eingehen. Für den Einbau der Gruppen Z und/oder X in Polymeren C gelten die gleichen Angaben, die für die Gruppen Y in den Polymeren A gemacht wurden. Kommen Polymere zum Einsatz, die Gruppen Z und/oder X und Y tragen, dann gelten die gleichen Angaben hinsichtlich Aufbau, Zusammensetzung, Wahl der Monomere, Erweichungstemperatur und Struktur, wie sie in der Definition für die Polymere A zu finden sind, jedoch um den Zusatz erweitert, dass zusätzlich auch zumindest eine Gruppe Z und/oder X im Polymer enthalten ist. Für den Einbau der Gruppen Z und/oder X und Y in Polymeren C, die beide Sorten an Gruppen tragen, gelten die gleichen Angaben, die für die Gruppen Y in den Polymeren A gemacht wurden.

Als weitere Bestandteile können die erfindungsgemäßen Haftklebemassenformulierungen Klebharze, Weichmacher, rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, weitere Füllstoffe, insbesondere solche, die nicht zu der zumindest einen Füllstoffpartikelsorte B zählen, und/oder Blähmittel enthalten.

### Kombinationen von Gruppen X und Y

Die erfindungsgemäßen Haftklebemassen enthalten zumindest eine Polymersorte A und zumindest eine Füllstoffpartikelsorte B. Polymere A enthalten zumindest zwei Gruppen Y, Füllstoffpartikel B enthalten zumindest eine Sorte an Gruppen Z, die durch thermische Energie, elektromagnetische Strahlung, Partikelstrahlung und/oder Schallenergie in die Gruppe X zerfällt oder chemisch umgewandelt wird. Die Gruppen X, Y und Z sind im Sinne dieser Erfindung so gewählt, dass zwischen diesen Gruppen X und Y oder über diese Gruppen X und Y eine Kopplung zwischen Polymeren A und Füllstoffpartikeln B erzeugt werden kann, aber zwischen den Gruppen Z und Y oder über die Gruppen Z und Y wiederum keine Kopplung zwischen Polymeren A und Füllstoffpartikeln B erzeugt wird. Die Kopplung wird während oder nach der Beschichtung durch Einwirken thermischer Energie, elektromagnetischer Strahlung, von Partikelstrahlung und/oder Schallenergie initiiert. Bei der Kopplung ist zumindest eine Gruppe X und zumindest eine Gruppe Y beteiligt. Unter Kopplung von zumindest einer Gruppe X und zumindest einer Gruppe Y werden im Sinne dieser Erfindung insbesondere
- eine chemische Reaktion, bei der die zumindest eine Gruppe X mit der zumindest einen Gruppe Y reagiert und zur Bildung einer kovalenten Bindung führt,
- die Bildung von Wasserstoffbrückenbindungen zwischen der zumindest einen Gruppe X und der zumindest einen Gruppe Y und/oder
- die Bildung einer koordinativen Bindung beispielsweise durch Komplexbildung, an der die zumindest eine Gruppe X und die zumindest eine Gruppe Y beteiligt sind, so dass zumindest eine Donor/Akzeptor-Bindung entsteht,
verstanden.

Die Kopplung kann dabei zwischen den Gruppen X und Y direkt oder auch durch Vermittlung durch eine oder mehrere weitere Substanzen, wie z. B. Kopplungsreagenzien oder Vernetzer, erfolgen. Für die Position und Anzahl der Gruppen X und Y in den erfindungsgemäß einsetzbaren Polymeren A und Füllstoffpartikeln B gelten die Definitionen, die für die Polymere A und die Füllstoffpartikel B gemacht worden sind.

Soll die erfindungsgemäße Kopplung der zumindest einen Polymersorte A mit der zumindest einen Füllstoffpartikelsorte B über die Gruppen Y und X als eine ***chemische Reaktion*** ablaufen, dann sind die beteiligten Gruppen X und Y insbesondere entsprechend der folgenden Ausführungen definiert.

Die erfindungsgemäßen Haftklebemassen enthalten zumindest einen Bestandteil, der zumindest eine Sorte an erfindungsgemäßen Segmenten, die die allgemeine Struktur (R°R°°R°°°C)-Z aufweisen, enthält. R°, R°° und R°°° können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R°R°°R°°°C)-Z aufgeführte Kohlenstoffatom selbst ungesättigt ist. In diesem Fall ist dieses Kohlenstoffatom nur mit Z und einem oder zwei der Reste R°, R°° oder R°°° verknüpft. Die Gruppe Z an sich ist nicht zur Kopplung mit der zumindest einen Polymersorte A befähigt und muss erst durch die Einwirkung durch thermische Energie, elektromagnetische Strahlung, Partikelstrahlung und/oder Schallenergie in die Gruppe X umgewandelt werden oder zerfallen, wodurch die Struktur (R°R°°R°°°C)-X resultiert. Die Reste R°, R°° und R°°° können unabhängig voneinander eine beliebige Anzahl an Heteroatomen beinhalten. Die Reste R°, R°° und R°°° können niedermolekularer oder polymerer Natur sein. Bis zu zwei der Reste R°, R°° und R°°° können außerdem auch Wasserstoffatome sein. Zumindest einer der Reste R°, R°° und R°°° ist durch eine chemische oder ionische Bindung, durch Chemisorption oder Physisorption mit einem Füllstoffpartikel der Sorte B verknüpft. Die für die Kopplungsreaktion notwendige Gruppe ist mit X bezeichnet.

Das zumindest eine erfindungsgemäße Segment der Struktur (R°R°°R°°°C)-X kann mit zumindest einem Segment, das in zumindest einem weiteren Bestandteil der erfindungsgemäßen Haftklebemasse enthalten ist und das die allgemeine Struktur (R^{*}R^{**}R^{***}C)-Y aufweist, zur Reaktion gebracht werden. R*, R** und R*** können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R*R**R***C)-Y aufgeführte Kohlenstoffatom selbst ungesättigt ist. In diesem Fall ist dieses Kohlenstoffatom nur mit Y und einem oder zwei der Reste R*, R** oder R*** verknüpft. Die Reste R*, R** und R*** können unabhängig voneinander eine beliebige Anzahl an Heteroatomen beinhalten. Die Reste R*, R** und R*** können niedermolekularer oder polymerer Natur sein. Bis zu zwei der Reste R*, R** und R*** können außerdem auch Wasserstoffatome sein. Zumindest einer der Reste R*, R** und R*** ist durch eine chemische Bindung mit einer Polymerkette der Sorte A verknüpft. Die für die Kopplungsreaktion notwendige Gruppe ist mit Y bezeichnet. In speziellen Ausführungen dieser Erfindung können einzelne oder mehrere Reste R*, R**, R*** von gleicher Art sein wie R°, R°° oder R°°°. Ebenso ist es erfindungsgemäß, wenn die Gruppe X und die Gruppe Y gleicher Art sind. In diesem speziellen Fall erfolgt die Kopplung vorteilhaft mittels eines Kopplungsreagenzes oder durch Einwirken eines Katalysators oder Initiators. Es ist im Sinne dieser Erfindung besonders vorteilhaft, wenn die Kopplungsreaktion durch Einwirken thermischer Energie initiiert wird, kann aber ebenfalls ausschließlich oder durch Kombination mit elektromagnetischer Strahlung, Partikelstrahlung und/oder Schallenergie initiiert werden.

Im Sinne dieser Erfindung sind beliebig viele weitere Gruppen einsetzbar, die mit einer Gruppe X und/oder einer Gruppe Y reagieren können.

Eine Kopplungsreaktion kann durch chemische Reaktion direkt zwischen den Gruppen X und Y ablaufen, so dass eine Spezies (R°R°°R°°°C)-X'-Y'-(CR*R**R***) gebildet wird (siehe Abb. 2). X' und Y' sind dabei im Falle einer chemischen Reaktion die Umsetzungsprodukte der Gruppen X beziehungsweise Y. In speziellen Fällen ist für die Kopplung der Gruppen X und Y ein Kopplungsreagenz X^{a}-Y^{a} oder X^{a}-R^{a}-Y^{a} erforderlich. X^{a} und Y^{a} sind Gruppen, die zu einer Reaktion mit Gruppen X bzw. Y befähigt sind und gleicher oder verschiedener Art sein können. Ferner ist es auch möglich, zwei Gruppen X über ein Kopplungsreagenz Y-R^{b}-Y zu verknüpfen sowie zwei Gruppen Y über ein Kopplungsreagenz X-R^{b}-X. R^{a} und R^{b} können gesättigte oder ungesättigte, aliphatische oder aromatische Kohlenwasserstoffreste sein und eine beliebige Anzahl an Heteroatomen beinhalten. Die Reste R^{a} und R^{b} können niedermolekularer oder polymerer Natur sein.

In Tabelle 1 sind einige Beispiele für die Gruppen Z sowie die aus ihr mittels thermischer Energie, elektromagnetischer Strahlung, Partikelstrahlung und/oder Schallenergie hervorgehenden Gruppen X aufgeführt. Die Tabelle erhebt nicht den Anspruch auf Vollständigkeit, sondern soll lediglich Beispiele für im Sinne dieser Erfindung einsetzbare Schutzgruppen Z für die Gruppen X führen. Dem Fachmann bekannte weitere Gruppen können ebenfalls erfindungsgemäß eingesetzt werden [siehe: T.W. Greene, P.G.M. Wuts; Protective Groups in Organic Synthesis, 3rd Edition, John Wiley & Sons, Inc.; New York, 1999].

In Tabelle 2 sind einige Beispiele für X und Y zusammengestellt, die erfindungsgemäß einsetzbar sind. Vorteilhaft verwendbare Kombinationen von Gruppen sind mit einem Kreuz gekennzeichnet. Unter Umständen werden für die Reaktion zwischen den angegebenen Gruppen zusätzliche Reagenzien und/oder spezielle Bedingungen benötigt. Solche Reagenzien werden dann der Haftklebemassenformulierung zugesetzt (siehe Abschnitt "Weitere Bestandteile"). Spezielle Bedingungen wie Temperatur oder Strahlung fallen ebenso in die Intention dieser Erfindung. Die Tabelle erhebt nicht den Anspruch auf Vollständigkeit, sondern soll lediglich Beispiele für im Sinne dieser Erfindung einsetzbare Gruppen und Kombinationen einsetzbarer Gruppen vor Augen führen. Dem Fachmann bekannte weitere Gruppen und Kombinationen für entsprechende Reaktionen können ebenfalls erfindungsgemäß eingesetzt werden. Die in Tabelle 1 enthaltenen Reste R¹ R², R³, R⁴, R⁵, R⁶ sowie R^{a}, R^{b}, R^{c}, R^{d}, R^{e}, R^{f} können unabhängig voneinander gesättigte oder ungesättigte, aliphatische oder aromatische Kohlenwasserstoffreste sein, die eine beliebige Anzahl an Heteroatomen enthalten und niedermolekularer oder polymerer Natur und oder wahlweise Wasserstoffatome sein können. Die Reste können entsprechend der vorstehenden Definition gleichen oder verschiedenen Aufbaus sein. Die Reste R¹, R² und R³ können untereinander verknüpft sein, die Reste R⁵ und R⁶ können untereinander verknüpft sein, die Reste R^{a}, R^{b} und R^{c} können untereinander verknüpft sein und die Reste R^{e} und R^{f} können untereinander verknüpft sein. Zyklische Säureanhydride wie Maleinsäureanhydrid oder Bernsteinsäureanhydrid können als chemische Gruppe in beliebiger Weise an Polymere A oder Füllstoffpartikel B angebaut sein. Maleinsäureanhydrid bietet zudem die Möglichkeit, als Comonomer in Polymeren A eingebaut zu sein.

Unter dem Eintrag "-PI" in Tabelle 1 ist eine Gruppe zu verstehen, die eine Photoinitiatorfunktion innehat. Durch Bestrahlung mit UV-Licht geeigneter Wellenlänge wird die Gruppe aktiviert und, je nach Art des Photoinitiators, eine radikalische Reaktion oder eine kationische Reaktion initiiert. Geeignete Vertreter solcher Gruppen sind Typ-l-Photoinitiatoren, also sogenannte α-Spalter wie Benzoin- und Acetophenon-Derivate, Benzilketale oder Acylphosphinoxide, Typ-II-Photoinitiatoren, also sogenannte Wasserstoffabstraktoren wie Benzophenon-Derivate und einige Chinone, Diketone und Thioxanthone, und kationische Photoinitiatoren, wie zum Beispiel "Photoacid Generators" wie arylierte Sulphonium oder lodonium Salze und dimerisierte arylierte ImidazolDerivate. Ferner können Triazin-Derivate zur Initiierung radikalischer und kationischer Reaktionen verwendet werden.

Photoinitiierende Gruppen Z bzw. X und/oder Y vom Typ I umfassen im Sinne dieser Erfindung bevorzugt Benzoin, Benzoinether wie beispielsweise Benzoinmethylether, Benzoin-isopropylether, Benzoinbutylether, Benzoin-isobutylether, Methylolbenzoin-Derivate wie Methylolbenzoinpropylether, 4-Benzoyl-1,3-dioxolan und seine Derivate, Benzilketal-Derivate wie 2,2-Dimethoxy-2-phenylacetophenon oder 2-Benzoyl-2-phenyl-1,3-dioxolan, α,α-Dialkoxyacetophenone wie α,α-Dimethoxyacetophenon und α,α-Diethoxyacetophenon, α-Hydroxyalkylphenone wie 1-Hydroxycyclohexylphenylketon, 2-Hydroxy-2-methyl-1-phenylpropanon und 2-Hydroxy-2-methyl-1-(4-isopropylphenyl)-propanon, 4-(2-Hydroxyethoxy)-phenyl-2-hydroxy-2-methyl-2-propanon und seine Derivate, α-Aminoalkylphenone wie 2-Methyl-1-[4-(methylthio)-phenyl]-2-morpholinopropan-2-on und 2-Benzyl-2-dimethylamino-1-(4-morpholinophenyl)-butan-1-on, Acylphosphinoxide wie 2,4,6-Trimethylbenzoyldiphenylphosphinoxid und Ethyl-2,4,6-trimethylbenzoylphenylphosphinat und *O*-Acyl-α-oximinoketone.

Erfindungsgemäß bevorzugt einsetzbare photoinitiierende Gruppen vom Typ II basieren beispielsweise auf Benzophenon und seinen Derivaten wie 2,4,6-Trimethylbenzophenon oder 4,4'-Bis-(dimethylamino)-benzophenon, Thioxanthon und seinen Derivaten wie 2-iso-Propylthioxanthon und 2,4-Diethylthioxanthon, Xanthon und seinen Derivaten und Anthrachinon und seinen Derivaten.

Typ-II-Photoinitiatoren werden besonders vorteilhaft in Kombination mit stickstoffhaltigen Coinitiatoren, den sogenannten Amin-Synergisten eingesetzt. Bevorzugt werden im Sinne dieser Erfindung tertiäre Amine verwendet. Ferner kommen in Kombination mit Typ-II-Photoinitiatoren vorteilhaft Wasserstoffatomdonoren zur Anwendung. Beispiele hierfür sind Substrate, die Aminogruppen enthalten. Beispiele für Amin-Synergisten sind Methyldiethanolamin, Triethanolamin, Ethyl-4-(dimethylamino)-benzoat, 2-n-Butoxyethyl-4-(dimethylamino)-benzoat, iso-Acryl-4-(dimethylamino)-benzoat, 2-(Dimethylaminophenyl)-ethanon sowie ungesättigte und damit copolymerisierbare tertiäre Amine, (meth)acrylierte Amine, ungesättigte Amin-modifizierte Oligomere und Polymere auf Polyester- oder Polyetherbasis und Amin-modifizierte (Meth)acrylate. Es ist im Sinne dieser Erfindung möglich, wenn solche chemischen Baugruppen mit Polymeren und/oder Füllstoffen verknüpft sind.

Im Sinne dieser Erfindungen können auch beliebige Kombinationen verschiedener Arten von Typ-I und/oder Typ-II photoinitüerender Gruppen eingesetzt werden.

In einer besonders bevorzugten Variante dieser Erfindung sind Gruppen mit photoinitiierendem Charakter als Gruppen Y in zumindest einer Sorte an Polymeren A enthalten.

In einer weiteren besonders bevorzugten Variante dieser Erfindung sind Gruppen mit photoinitiierendem Charakter als Gruppen Z bzw. X in zumindest einer Sorte an funktionalisierten Füllstoffpartikeln B enthalten.

Läuft die erfindungsgemäße Kopplung der zumindest einen Polymersorte A mit der zumindest einen Füllstoffpartikelsorte B über die Gruppen Y und X über die Bildung von ***Wasserstoffbrückenbindungen*** ab, dann sind die beteiligten Gruppen X und Y entsprechend der folgenden Ausführungen definiert. Siehe hierzu beispielsweise D. Philp, J. F. Stoddard, Angew. Chem. 1996, 108, 1242 - 1286 oder C. Schmuck, W. Wienand, Angew. Chem. 2001, 113, 4493 - 4499.

Die erfindungsgemäßen Haftklebemassen enthalten in diesem Fall zumindest einen Bestandteil, der eine Sorte an Segmenten, die die allgemeine Struktur (R^{#}R^{##}R^{###}C)-X^{#} aufweist, enthält. R^{#}, R^{##} und R^{###} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{#}R^{##}R^{###}C)-X^{#} aufgeführte Kohlenstoffatom selbst ungesättigt ist. In diesem Fall ist dieses Kohlenstoffatom nur mit X^{#} und einem oder zwei der Reste R^{#}, R^{##} oder R^{###} verknüpft. Die Reste R^{#}, R^{##} und R^{###} können unabhängig voneinander eine beliebige Anzahl an Heteroatomen beinhalten. Die Reste R^{#}, R^{##} und R^{###} können niedermolekularer oder polymerer Natur sein. Bis zu zwei der Reste R^{#}, R^{##} und R^{###} können außerdem auch Wasserstoffatome sein. Zumindest einer der Reste R^{#}, R^{##} und R^{###} ist durch eine chemische oder ionische, durch Chemisorption oder Physisorption mit einem Füllstoffpartikel B verknüpft. Die für die Kopplungsreaktion notwendige Gruppe ist mit X^{#} bezeichnet, die wiederum mittels thermischer Energie, elektromagnetischer Strahlung, Partikelstrahlung und/oder Schallenergie aus einer Gruppe Z hervorgeht. Die Gruppe Z wiederum ist entweder nicht zur Kopplung der zumindest einen Polymersorte A mit dem zumindest einen Füllstoffpartikel B durch Ausbildung von Wasserstoffbrückenbindungen befähigt oder kann ebenfalls solche Wechselwirkungen aufweisen, die jedoch aufgrund von z. B. Polyvalenzeffekten oder Chelatbildung nicht so stark ausgeprägt sind wie bei der Gruppe X^{#}.

Das zumindest eine erfindungsgemäße Segment der Struktur (R^{#}R^{##}R^{###}C)-X^{#} ist in der Lage, Wasserstoffbrückenbindungen mit zumindest einem funktionellen Segment, das in zumindest einem weiteren Bestandteil enthalten ist und das die allgemeine Struktur (R^{∼}R^{∼∼}R^{∼∼∼}C)-Y^{∼} aufweist, zu bilden. R^{∼}, R^{∼∼} und R^{∼∼∼} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{∼}R^{∼∼}R^{∼∼∼}C)-Y^{∼} aufgeführte Kohlenstoffatom selbst ungesättigt ist. In diesem Fall ist dieses Kohlenstoffatom nur mit Y^{∼} und einem oder zwei der Reste R^{∼}, R^{∼∼} oder R^{∼∼∼} verknüpft. Die Reste R^{∼}, R^{∼∼} und R^{∼∼∼} können unabhängig voneinander eine beliebige Anzahl an Heteroatomen beinhalten. Die Reste R^{∼}, R^{∼∼} und R^{∼∼∼} können niedermolekularer oder polymerer Natur sein. Bis zu zwei der Reste R^{∼}, R^{∼∼} und R^{∼∼∼} können außerdem auch Wasserstoffatome sein. Zumindest einer der Reste R^{∼}, R^{∼∼} und R^{∼∼∼} ist durch eine chemische Bindung mit einer Polymerkette der Sorte A verknüpft. Die für die Kopplungsreaktion notwendige Gruppe ist mit Y^{∼} bezeichnet. In speziellen Ausführungen dieser Erfindung können einzelne oder mehrere Reste R^{∼}, R^{∼∼}, R^{∼∼∼} von gleicher Art sein wie R^{#}, R^{##} oder R^{###}. Ebenso ist es erfindungsgemäß, wenn die Gruppe X^{#} und die Gruppe Y^{∼} gleicher Art sind. In diesem speziellen Fall erfolgt die Kopplung mittels eines Kopplungsreagenzes.

Im Sinne dieser Erfindung sind beliebig viele weitere Gruppen einsetzbar, die mit zumindest einer Gruppe X und/oder zumindest einer Gruppe Y eine Verbindung eingehen können.

Eine Kopplungsreaktion kann durch Ausbildung von Wasserstoffbrückenbindungen direkt zwischen den Gruppen X^{#} und Y^{∼} ablaufen, so dass eine Spezies (R^{#}R^{##}R^{###}C)-X^{#}-Y^{∼}-(CR^{∼}R^{∼∼}R^{∼∼∼}) gebildet wird (siehe Abb. 2). In speziellen Fällen ist für die Kopplung der Gruppen X^{#} und Y^{∼} ein Kopplungsreagenz X^{#a}-Y^{∼a} oder X^{#a}-R^{a'}-Y^{∼a} erforderlich. X^{#a} und Y^{∼a} sind Gruppen, die zu einer Ausbildung von Wasserstoffbrücken mit Y^{∼} bzw. X^{#} befähigt sind und gleicher oder verschiedener Art sein können. Ferner ist es auch möglich, zwei Gruppen X^{#} über ein Kopplungsreagenz Y^{∼}-R^{b'}-Y^{∼} zu verknüpfen sowie zwei Gruppen y^{∼} über ein Kopplungsreagenz X^{∼}-R^{b'}-X^{∼}. R^{a'} und R^{b'} können gesättigte oder ungesättigte, aliphatische oder aromatische Kohlenwasserstoffreste sein und eine beliebige Anzahl an Heteroatomen beinhalten. Die Reste R^{a'} und R^{b'} können niedermolekularer oder polymerer Natur sein.

Die koppelbaren Gruppen können einzähnig oder vorzugsweise mehrzähnig sein. Zähnigkeit bezieht sich dabei auf die Möglichkeit einer Gruppe, eine bestimmte Anzahl von Wasserstoffbrückenbindungen auszubilden. Wasserstoffbrückenbindungen zwischen einzähnigen oder vorzugsweise mehrzähnigen funktionellen Segmenten sind als strukturbildende Elemente aus verschiedenen Beispielen bekannt. In der Natur dienen Wasserstoffbrückenbindungen zwischen komplementären funktionellen Segmenten zum Aufbau von Desoxyribonukleinsäure (DNS) und Ribonukleinsäure (RNS). Eine spezielle Kombination aus Donor- und Akzeptorstellen macht es möglich, dass Kopplungen nur nach dem Schlüssel-Schloss-Prinzip erfolgen können. Handelt es sich beispielsweise bei den funktionellen Segmenten α (Typ "Schlüssel") und β (Typ "Schloss") um komplementäre Segmente, die Wasserstoffbrückenbindungen ausbilden können, dann ist eine Verbindung zwischen α und β möglich, zwischen α und α sowie β und β jedoch nicht. Die Natur beschränkt sich bei der Auswahl der funktionellen Segmente beim Aufbau der DNS auf die zwei organischen Basenpaare Adenin/Thymin (bzw. statt Thymin Uracil in RNS) als zweizähnige Segmente und Cytosin/Guanin als dreizähnige Segmente.

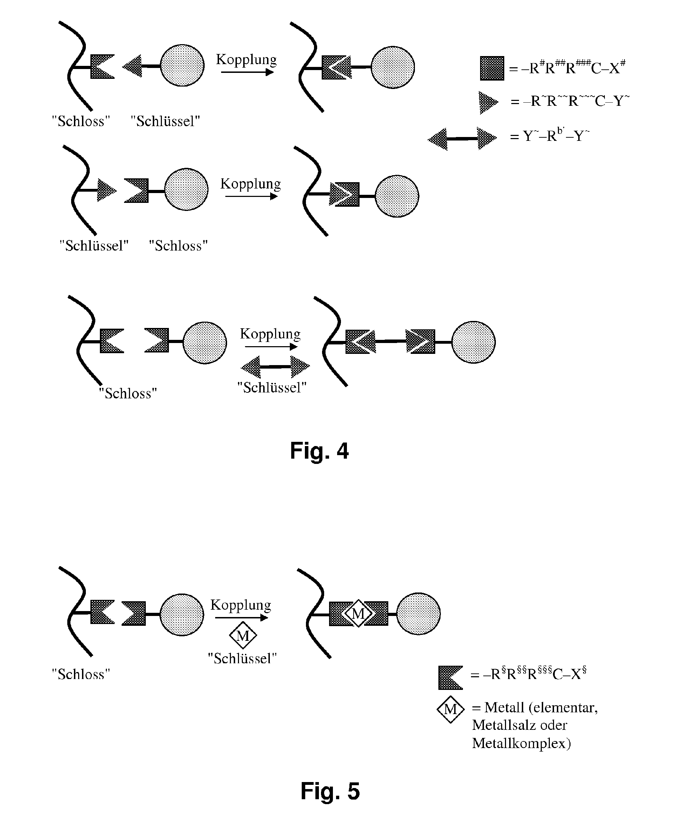

Im Sinne dieser Erfindung können Polymere A und Füllstoffpartikel B mit Gruppen auf Basis von Adenin, Thymin, Uracil, Cytosin, Guanin, deren Derivaten sowie weiteren Verbindungen, die zur Ausbildung von Wasserstoffbindungen nach dem Schlüssel-Schloss-Prinzip in der Lage sind, wie beispielsweise 2-Ureido-4-pyrimidon und dessen Derivate, 2,6-Diacetylaminopyridin und dessen Derivate, Diacetylpyrimidin und dessen Derivate sowie Ureidoacylpyrimidin und dessen Derivate, eingesetzt werden. Diese Aufzählung erhebt nicht den Anspruch auf Vollständigkeit. Dem Fachmann sind vielmehr weitere Systeme bekannt, die erfindungsgemäß eingesetzt werden können. Wird diese Art der Funktionalisierung gewählt, dann trägt im Sinne dieser Erfindung entweder die zumindest eine Polymersorte A Gruppen vom Typ "Schlüssel" und die zumindest eine Füllstoffpartikelsorte B Gruppen vom Typ "Schloss" oder umgekehrt. Fig. 4 zeigt zwei Beispiele für die Kopplung reaktiver Bestandteile über Ausbildung von Wasserstoffbrückenbindungen durch Verwendung von zwei komplementären Gruppen, zum einen die direkte Kopplung von Polymer A und Füllstoffpartikel B und zum anderen die Kopplung von Polymer A und Füllstoffpartikel B unter Verwendung eines Kopplungsreagenzes ("Schlüssel-Schloss-Prinzip").

Erfindungsgemäß ist ebenfalls die Kopplung von Gruppen über ***koordinative Bindungen*** möglich. Beispiele für koordinative Bindungen sind Ligand-Zentralatom-Bindungen in Komplexen, also die Bildung einer koordinativen Bindung mit Metallatomen, die elementar, in Form von Metallsalzen und/oder in Form von Metallkomplexen vorliegen können, sowie alle weiteren Donor-Akzeptor-Bindungen (siehe hierzu beispielsweise D. Philp, J. F. Stoddard, Angew. Chem. 1996, 108, 1242 - 1286; M. Rehahn, Acta Polym. 1998, 49, 201 - 224 oder B. G. G. Lohmeijer, U. S. Schubert, J. Polym. Sci. A Polym. Chem. 2003, 41, 1413 - 1427)*.*

Wird dieses Kopplungsprinzip im Sinne dieser Erfindung gewählt, dann enthält die Haftklebemasse Füllstoffpartikel der Sorte B, die Gruppen mit der allgemeinen Struktur (R^{§}R^{§§}R^{§§§}C)-X^{§} enthalten. R^{§}, R^{§§} und R^{§§§} können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R^{§}R^{§§}R^{§§§}C)-X^{§} aufgeführte Kohlenstoffatom selbst ungesättigt ist. In diesem Fall ist dieses Kohlenstoffatom nur mit X^{§} und einem oder zwei der Reste R^{§}, R^{§§} oder R^{§§§} verknüpft. Die Reste R^{§}, R^{§§} und R^{§§§} können unabhängig voneinander eine beliebige Anzahl an Heteroatomen beinhalten. Die Reste R^{§}, R^{§§} und R^{§§§} können niedermolekularer oder polymerer Natur sein. Bis zu zwei der Reste R^{§}, R^{§§} und R^{§§§} können außerdem auch Wasserstoffatome sein. Zumindest einer der Reste R^{§}, R^{§§} und R^{§§§} ist durch eine chemische oder ionische Bindung, durch Chemisorption oder Physisorption mit einem Füllstoffpartikel der Sorte B verknüpft. Die für die Kopplungsreaktion notwendige Gruppe ist mit X^{§} bezeichnet, die wiederum mittels thermischer Energie, elektromagnetischer Strahlung, Partikelstrahlung und/oder Schallenergie aus einer Gruppe Z hervorgeht. Die Gruppe Z wiederum ist entweder nicht zur Kopplung der zumindest einen Polymersorte A mit dem zumindest einen Füllstoffpartikel B durch Ausbildung einer koordinativen Bindung befähigt oder kann ebenfalls solche Bindungen aufweisen, die jedoch aufgrund von z. B. Polyvalenzeffekten oder Chelatbildung nicht so stark sind wie die der Gruppe X^{§}, sodass das Polymer bis zum Zeitpunkt der Umwandlung der Gruppe Z in die Gruppe X^{§} auch weiterhin gut verarbeitbar und in einer bevorzugten Ausführung aus der Schmelze verarbeitbar ist. Gleichzeitig enthält die Haftklebemasse Polymere der Sorte A, die Gruppen mit der allgemeinen Struktur (R⁼R⁼⁼R⁼⁼⁼C)-Y⁼ enthalten. R⁼, R⁼⁼ und R⁼⁼⁼ können unabhängig voneinander gesättigte oder ungesättigte, aliphatische oder aromatische Kohlenwasserstoffreste, die auch untereinander verknüpft sein können, gleicher oder unterschiedlicher Art sein. Es ist im Sinne dieser Erfindung auch möglich, dass das in (R⁼R⁼⁼R⁼⁼⁼C)-Y⁼ aufgeführte Kohlenstoffatom selbst ungesättigt ist. In diesem Fall ist dieses Kohlenstoffatom nur mit Y⁼ und einem oder zwei der Reste R⁼, R⁼⁼ oder R⁼⁼⁼ verknüpft. Die Reste R⁼, R⁼⁼ und R⁼⁼⁼ können unabhängig voneinander eine beliebige Anzahl an Heteroatomen beinhalten. Die Reste R⁼, R⁼⁼ und R⁼⁼⁼ können niedermolekularer oder polymerer Natur sein. Bis zu zwei der Reste R⁼, R⁼⁼ und R⁼⁼⁼ können außerdem auch Wasserstoffatome sein. Zumindest einer der Reste R⁼, R⁼⁼ und R⁼⁼⁼ ist durch eine chemische Bindung mit einer Polymerkette der Sorte A verknüpft. Die für die Kopplungsreaktion notwendige Gruppe ist mit Y⁼ bezeichnet. Die Gruppen X^{§} und Y⁼ können gleicher oder verschiedener Art sein. Sind sie verschieden, dann übernimmt eine der Gruppenarten die Donorfunktion und die andere die Akzeptorfunktion, die für die Ausbildung von koordinativen Bindungen erforderlich sind. Sind beide Gruppen von gleicher Art, dann erfolgt die Bildung der koordinativen Bindung über ein Kopplungsreagenz.

Die Gruppen in den Polymeren A und den Füllstoffpartikeln B sind vorteilhaft so aufgebaut, dass sie in der Lage sind, koordinative Bindungen mit Metallen vom Typ M, die elementar, in Form von Metallsalzen oder in Form von Metallkomplexen vorliegen können, ausbilden zu können. Metallkomplexe können auch mehrkernig vorliegen. Einzähnige oder mehrzähnige Segmente können zur Anwendung kommen. Das Kopplungsprinzip ist in Fig. 5 schematisch dargestellt. Zumindest zwei Gruppen vom Typ "Schlüssel" koppeln durch Koordination von M, das die Funktion "Schloss" übernimmt.

Bei der Bildung der koordinativen Bindung ("Kopplung") kann sich die Struktur von M zu M' ändern. Dies kann sich in veränderten Oxidationsstufen aber auch in einer veränderten Ligandenstruktur und/oder -zusammensetzung äußern. Beim Einsatz von Metallatomen ist es im Sinne dieser Erfindung insbesondere vorteilhaft, spezielle Vorkehrungen zur Dispersion von M in der Haftklebemasse zu treffen. Dies geschieht bevorzugt durch Wahl besonders geeigneter Gegenionen, wenn es sich um Metallsalze handelt, oder besonders geeignete Komplexliganden, wenn es sich um Metallkomplexe handelt. Geeignete Gegenionen und Komplexliganden übernehmen daher die Funktion von Kompatibilisatoren und Dispergierhilfsmitteln. Es ist besonders vorteilhaft, das Metallatom M in einer schmelzbaren Matrix zu dispergieren, die keine Bestandteile enthält, die mit M koordinative Bindungen eingehen können. Dieses Gemisch wird erst unmittelbar vor der Beschichtung der übrigen Haftklebemassenformulierung, die zumindest eine Polymersorte A und zumindest eine Füllstoffpartikelsorte B enthält, zudosiert.

Besonders bevorzugt ist eine Kopplung unter Verwendung von chelatisierenden Segmenten. Beispiele für Liganden, die als Gruppen zum Einsatz kommen können, sind Bipyridin und Terpyridin sowie deren Derivate, Acetylacetonat und dessen Derivate, Ethylendiamintetraessigsäure und dessen Derivate, Nitrilotriessigsäure und dessen Derivate, Hydroxyethylethylendiamintriessigsäure und dessen Derivate, Diethylentriaminpentaessigsäure und dessen Derivate sowie Carbonsäuren. Diese Aufzählung erhebt nicht den Anspruch auf Vollständigkeit. Dem Fachmann sind vielmehr weitere Systeme bekannt, die erfindungsgemäß eingesetzt werden können. Diese Gruppen sind untereinander nicht reaktiv. Alle diese Gruppen enthaltenen Bestandteile können daher in einem Massestrom verwendet werden. Die Kopplung der Gruppen erfolgt, sobald das Metallatom M enthaltende Gemisch dem Massestrom zugemischt wird, was im Sinne dieser Erfindung unmittelbar vor der Beschichtung geschieht.

Als Metallatome eignen sich im Sinne dieser Erfindung alle diejenigen chemischen Elemente, die in der Lage sind, als Akzeptor für koordinative Bindungen zu wirken. Dies sind Erdalkalimetalle, bevorzugt Ca und/oder Mg, Übergangsmetalle, bevorzugt Ti, Mn, Fe, Co, Ni, Cu, Zn, Mo, Ru, Rh, Pd, W, Re, Os, Ir und/oder Pt sowie Al und Lanthanoide. Geeignete Kompatibilisatoren und Dispergierhilfsmittel für diese erfindungsgemäß einsetzbaren Metallatome sind beispielsweise Alkoholate aliphatischer oder aromatischer, gesättigter oder ungesättigter, eine beliebige Anzahl von Heteroatomen enthaltener Moleküle, die niedermolekularer oder polymerer Natur sein können. Es eignen sich ferner offenkettige oder ringförmige ungesättigte Kohlenwasserstoffe, die eine beliebige Anzahl von Heteroatomen enthalten und die niedermolekularer oder polymerer Natur sein können. Weitere erfindungsgemäß einsetzbare Dispergierhilfsmittel und Kompatibilisatoren für M sind niedermolekulare chelatisierende Verbindungen organischer Art.

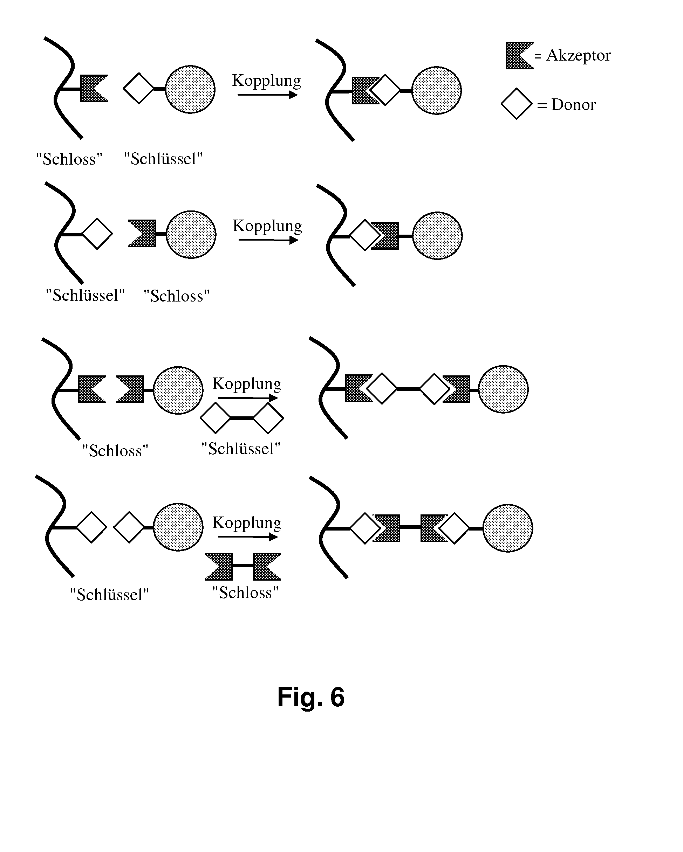

Im Allgemeinen kann M eine Akzeptor-Gruppe ("Schlüssel") sein, die in Verbindung mit einer Donor-Gruppe vom Typ "Schloss" eine koordinative Bindung ausbilden kann. Die Akzeptorgruppe kann in diesem Fall an Polymer A und Füllstoffpartikel B gebunden sein oder auch als Kopplungsreagenzien eingesetzt werden. Dieser allgemeine Fall ist in Fig. 6 schematisch dargestellt. Es ist ferner erfindungsgemäß, mit Akzeptor-Gruppen ausgestattete Polymere A und Füllstoffpartikel B in Kombination mit Donor-Gruppen tragenden Kopplungsreagenzien zu verwenden.

Im Sinne dieser Erfindung können beliebige Kombinationen verschiedener Arten von Kopplungsreaktionen zur Anwendung kommen. Erfindungsgemäß kommt zumindest eine Art von Kopplungsreaktion zum Einsatz.

### Verfahren zur Herstellung von selbstklebenden Produkten

Die Herstellung erfindungsgemäßer selbstklebender Produkte umfasst die Prozessschritte des Formulierens/Compoundierens, der Beschichtung und der Vernetzung.

### Compoundierverfahren

Die erfindungsgemäßen Formulierungen können unter Verwendung von Lösungsmitteln in Rührkesseln oder z. B. in Lösungsmittelknetern oder auch durch Einsatz von Hochgeschwindigkeitsdispensern hergestellt werden. Bevorzugt werden solche Formulierungen aber lösungsmittelfrei hergestellt. Dazu bieten sich im diskontinuierlichen Betrieb Kneter an und im kontinuierlichen Betrieb Extruder, wie beispielsweise Doppelschneckenextruder. Als Compoundieraggregate sind im Sinne dieser Erfindung solche geeignet, die dispersive und optional distributive Mischelemente enthalten.

Dispersive Mischelemente sorgen dabei für eine möglichst feine Verteilung der Füllstoffpartikel in der Formulierung, während die distributiven Elemente geschmolzene Bestandteile wie Harze oder Polymere im Gemisch der Haftklebemassenformulierung homogenisieren. Im lösungsmittelfreien diskontinuierlichen Betrieb bieten sich insbesondere Banbury-Mischer, Buss-Kneter oder Baker-Perkins Ko-Kneter an. Im kontinuierlichen Betrieb können Doppelschneckenextruder in co-rotierender Fahrweise bevorzugt eingesetzt werden.

### Beschichtungsverfahren

Als Beschichtungsverfahren können im Sinne dieser Erfindung Rakelverfahren, Düsenrakelverfahren, Rollstabdüsenverfahren, Extrusionsdüsenverfahren, Gießdüsen- und Gießerverfahren zur Anwendung kommen. Ebenfalls erfindungsgemäß sind Auftragsverfahren wie Walzenauftragsverfahren, Druckverfahren, Siebdruckverfahren, Rasterwalzenverfahren, Inkjetverfahren und Sprühverfahren. Zur Speisung des erfindungsgemäßen Beschichtungsaggregats kann zwischen Dosier- und Mischanlage und Beschichtungsaggregat optional ein Förder- und/oder Mischaggregat, z. B. ein Einschnecken- oder Doppelschneckenextruder, zwischengeschaltet sein. Der wahlweise einsetzbare Extruder ist separat beheizbar. An die Beschichtung schließt zumindest im Falle lösungsmittelhaltiger Massesysteme noch ein Trocknungsschritt an.

### Vernetzungsverfahren

Besonders bevorzugt ist die Initiierung der Vernetzung der Haftklebemasse nach ihrer Beschichtung. Hierzu bietet sich vorteilhaft ein strahlenchemischer Prozess an. Als eine sehr bevorzugte Variante, die im Sinne dieser Erfindung eingesetzt werden kann, sei die Vernetzung mit ultravioletter Strahlung genannt. Mittels kurzzeitiger Einwirkung von Licht in einem Wellenlängenbereich zwischen 200 bis 400 nm wird das beschichtete Material, das in dieser Auslegung der Erfindung die Photoinitiatorfunktionen bevorzugt als Gruppen X und/oder Gruppen Y enthält, bestrahlt und damit vernetzt. Hierzu kommen insbesondere Quecksilber-Hochdruck- oder -Mitteldruck-Lampen bei einer Leistung von 80 bis 240 W/cm zum Einsatz. Weitere Strahlungsquellen, die im Sinne dieser Erfindung einsetzbar sind, sind die dem Fachmann geläufigen Strahlungsquellen. Wahlweise wird das Emissionsspektrum der Lampe auf den eingesetzten Photoinitiator abgestimmt oder die Art des Photoinitiators an das Lampenspektrum angepasst. Die Bestrahlungsintensität wird der jeweiligen Quantenausbeute des UV-Photoinitiators, dem einzustellenden Vernetzungsgrad und der Bahngeschwindigkeit angepasst.

Weiterhin ist es bevorzugt möglich, die erfindungsgemäßen Haftklebemassenformulierungen nach ihrer Beschichtung mit Elektronenstrahlen zu vernetzen. Dies kann auch in Kombination mit einer UV-Vernetzung geschehen. Typische Bestrahlungsvorrichtungen, die zum Einsatz kommen können, sind Linear-Kathodensysteme, Scannersysteme bzw. Segmentkathodensysteme, sofern es sich um Elektronenstrahlbeschleuniger handelt. Typische Beschleunigungsspannungen liegen im Bereich zwischen 50 kV und 1 MV, vorzugsweise 80 kV und 300 kV. Die angewandten Bestrahlungsdosen liegen zwischen 5 bis 250 kGy, insbesondere zwischen 20 und 100 kGy.

Eine weitere vorteilhafte Ausführung ist die Initiierung der Vernetzungsreaktion mittels Schallenergie, wie z. B. Ultraschall, wobei die Gruppe Z in die Gruppe X zerfällt, die erst zur Reaktion mit dem zumindest einen Polymer der Sorte A oder der Gruppe Y, die an das zumindest eine Polymer der Sorte A gebunden ist. In eine besonders vorteilhafte Ausführung dieser Variante erfolgt die Initiierung sowohl bei der diskontinuierlichen als auch bei der kontinuierlichen Prozessführung entweder zwischen der Compoundierung und dem Beschichtungsprozess oder nach der Beschichtung, um die Verarbeitbarkeit der Masse gerade in Hinblick auf eine lösungsmittelfreie Prozessführung zu gewährleisten. Die Schallenergie wird durch Direktbeschall-Hörner erzeugt. Weitere Schallquellen, die im Sinne dieser Erfindung einsetzbar sind, sind die dem Fachmann geläufigen Schallquellen. Die eigentliche Vernetzung erfolgt nach der Aktivierung mittels Schallenergie erfolgt thermisch. Die thermische Energie für die Vernetzungsreaktion wird dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen. Kombinationen dieser Verfahrensmöglichkeiten insbesondere mit den strahlenchemischen Vernetzungsverfahren sind im Sinne dieser Erfindung möglich.

Typischerweise werden Direktbeschall-Hörner eingesetzt, deren Leistung im Bereich zwischen 50 W und 16 kW liegen, vorzugsweise 1 kW und 16 kW. Die angewandten Frequenzen liegen zwischen 20 kHz bis 2 MHz, insbesondere zwischen 20 und 30 kHz.

Im Sinne dieser Erfindung ist es weiterhin besonders bevorzugt, die Vernetzung durch Einwirkung thermischer Energie zu realisieren. Dies kann optional in Kombination mit einem oder mehreren strahlenchemischen Verfahren geschehen. Wird thermische Energie zur Initiierung der Vernetzungsreaktion verwendet, dann ist darauf zu achten, dass der Vernetzungsprozess während der Beschichtung noch nicht zu weit fortgeschritten ist, da sich dadurch das Beschichtungsverhalten der Formulierung ändert. Besonders bevorzugt wird in diesem Fall ein Compound hergestellt, das bereits Füllstoffpartikel der Sorte B und Polymere der Sorte A enthält, die Gruppen X, welche mittels elektrochemischer Strahlung, Partikelstrahlung, Schallenergie oder besonders vorteilhaft thermischer Energie durch eine chemische Reaktion, Dissoziation oder Zersetzung aus der Gruppe Z hervorgeht, und Y jedoch so ausgewählt sind, dass sie direkt nicht miteinander reagieren können sondern nur durch Vermittlung eines Vernetzers oder eines Kopplungsreagenzes. Vernetzer oder Kopplungsreagenz werden dann bevorzugt unmittelbar vor der Beschichtung dem ansonsten fertig homogenisierten Compound zudosiert und mit ihm vermischt. Optional wird ein Zwei- oder Mehrkomponentenprozess durchgeführt, wobei das besonders Vorteilhafte dieser Erfindung aufgrund der Schützung bzw. Blockierung der Gruppe X darin besteht, das bei diesem Prozess alle Rohstoffe nicht auf zumindest zwei Massevorräte aufgeteilt werden müssen, so dass eine räumliche Trennung bis unmittelbar vor der Beschichtung all derjenigen Rohstoffe gewährleistet wird, die zu einer Reaktion miteinander in der Lage sind. Bei einer thermischen Umwandlung bzw. Entschützung der Gruppe Z in die Gruppe X ist es von Vorteil, während der Compoundierung ein Temperaturprofil einzustellen, so dass die zu der Umwandlung bzw. Entschützung benötigte Temperatur, die besonders bevorzugt deutlich höher als die normalen Prozesstemperaturen ist, erst kurz vor der Entnahme der Klebemasse z. B. aus dem Kneter bei einem diskontinuierlichen Verfahren oder bei einem kontinuierlichen Verfahren erst kurz vor Austritt aus dem Compoundieraggregat erreicht wird, um eine zu starke Vernetzung bei der Mischung zu verhindern. Die thermische Energie für die Vernetzungsreaktion wird dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen. Kombinationen dieser Verfahrensmöglichkeiten insbesondere mit den strahlenchemischen Vernetzungsverfahren sind im Sinne dieser Erfindung möglich. Erfolgt die Umwandlung bzw. Entschützung der Gruppe Z in die Gruppe X durch elektromagnetische Strahlung, Partikelstrahlung und/oder Schallenergie, so ist es besonders vorteilhaft, sowohl bei einer diskontinuierlichen als auch bei einer kontinuierlichen Prozessführung die Bestrahlung bzw. Beschallung der Klebemasse zwischen der Compoundierung und dem Beschichtungsprozess erfolgen zu lassen, wobei dies mit den schon oben beschriebenen Methoden sowie den Apparaten zur Erzeugung der Strahlung bzw. Ultraschalls geschehen kann. In beiden vorteilhaften Ausführungen der Erfindung wird die thermische Energie für die Vernetzungsreaktion dann entweder den vorgeheizten Masseströmen entnommen, durch Einstellung einer Temperatur des Beschichtungsaggregats zur Verfügung gestellt oder über einen Wärmekanal bzw. eine Infrarotstrecke nach der Beschichtung realisiert. Es ist ebenfalls erfindungsgemäß möglich, die in einer oder mehreren exothermen Reaktionen freiwerdende thermische Energie zum Ablauf dieser thermischen Reaktion zu nutzen.

Sehr bevorzugt im Sinne dieser Erfindung erfolgt die Herstellung erfindungsgemäßer selbstklebender Produkte in einem kontinuierlichen Prozess, bei dem die Verfahrensschritte der Compoundierung, der Beschichtung, der Vernetzung und gegebenenfalls der Trocknung direkt gekoppelt sind und damit ein in-line-Prozess zur Anwendung kommt, wobei einzelne Prozessschritte auch zumindest partiell simultan ablaufen können wie z. B. die Vernetzung und das Trocknen.

### Selbstklebende Produkte

### Produktaufbauten

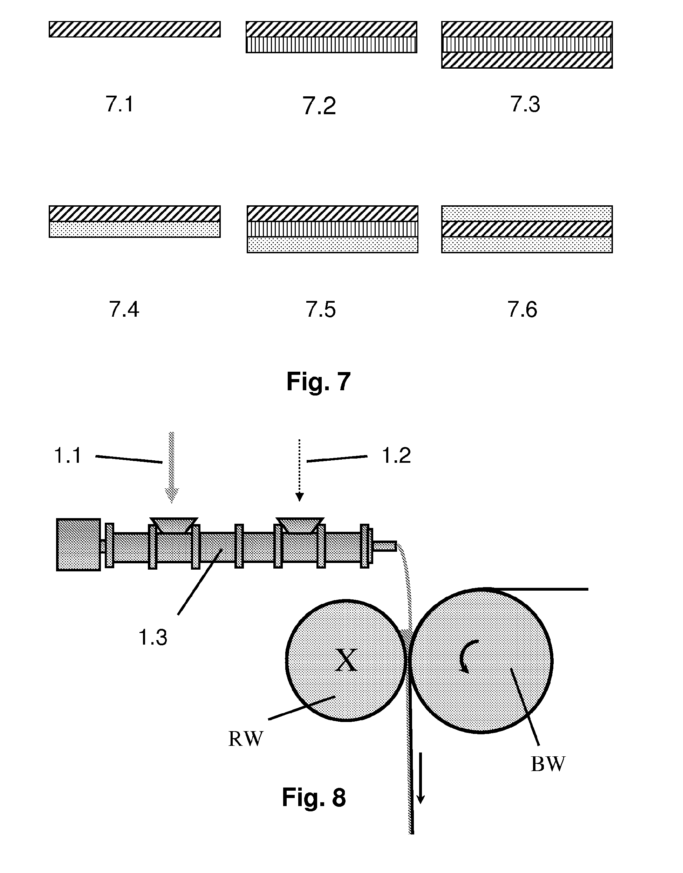

Die durch die erfindungsgemäßen Verfahren hergestellten Haftklebemassen lassen sich zum Aufbau verschiedenartiger selbstklebender Produkte wie beispielsweise Selbstklebebänder oder Selbstklebefolien nutzen. Erfindungsgemäße Aufbauten selbstklebender Produkte sind in Fig. 7 dargestellt. Jede Schicht in den erfindungsgemäßen Selbstklebebandaufbauten kann wahlweise geschäumt sein.

Im einfachsten Fall besteht ein erfindungsgemäßes selbstklebendes Produkt aus der Haftklebemasse in einschichtigem Aufbau (Aufbau in Fig. 7.1). Dieser Aufbau kann optional einseitig oder beidseitig mit einem Trennliner, z. B. einer Trennfolie oder einem Trennpapier eingedeckt werden. Die Schichtdicke der Haftklebemasse beträgt typischerweise zwischen 1 µm und 2000 µm, bevorzugt zwischen 5 µm und 1000 µm.

Die Haftklebemasse kann sich ferner auf einem Träger, insbesondere einem Folien- oder Papierträger oder einem textilen Flächengebilde befinden (Aufbau in Fig. 7.2). Der Träger kann dabei auf der zur Haftklebemasse zeigenden Seite dem Stand der Technik entsprechend vorbehandelt sein, so dass beispielsweise eine Verbesserung der Haftklebemasseverankerung erzielt wird. Ebenso kann die Seite mit einer funktionalen Schicht ausgerüstet sein, die beispielsweise als Sperrschicht fungieren kann. Die Trägerrückseite kann dem Stand der Technik entsprechend vorbehandelt sein, so dass beispielsweise eine Trennwirkung erreicht wird. Die Trägerrückseite kann ferner bedruckt sein. Die Haftklebemasse kann optional mit einem Trennpapier oder einer Trennfolie eingedeckt werden. Die Haftklebemasse weist eine typische Schichtdicke zwischen 1 µm und 2000 µm, bevorzugt zwischen 5 µm und 1000 µm auf.

Bei dem Aufbau gemäß Fig. 7.3 handelt es sich um ein doppelseitiges selbstklebendes Produkt, das als Mittelschicht z. B. eine Trägerfolie, ein Trägerpapier, ein textiles Flächengebilde oder einen Trägerschaum enthält. In diesem Aufbau kommen als obere und untere Schicht erfindungsgemäße Haftklebemassen gleicher oder verschiedener Art und/oder gleicher oder verschiedener Schichtdicke zur Anwendung. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Typischerweise weisen die Haftklebemasseschichten unabhängig voneinander Schichtdicken zwischen 1 µm und 2000 µm, bevorzugt zwischen 5 µm und 1000 µm auf.

Als weiteres doppelseitiges selbstklebendes Produkt ist der Aufbau gemäß Fig. 7.4 eine erfindungsgemäße Variante. Eine erfindungsgemäße Haftklebemasseschicht trägt auf einer Seite eine weitere Haftklebemassenschicht, die aber beliebiger Natur sein kann und daher nicht erfindungsgemäß sein braucht. Der Aufbau dieses selbstklebenden Produkts kann optional mit einem oder zwei Trennfolien oder Trennpapieren eingedeckt sein. Die Haftklebemasseschichten weisen unabhängig voneinander Schichtdicken zwischen typischerweise 1 µm und 2000 µm, bevorzugt zwischen 5 µm und 1000 µm auf.

Wie beim Aufbau in Fig. 7.4 handelt es sich auch bei dem Aufbau gemäß Fig. 7.5 um ein doppelseitiges selbstklebendes Produkt, das eine erfindungsgemäße Haftklebemasse enthält sowie eine beliebige weitere. Die beiden Haftklebemasseschichten sind in Fig. 7.5 jedoch durch einen Träger, eine Trägerfolie, ein Trägerpapier, ein textiles Flächengebilde oder einen Trägerschaum voneinander getrennt. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen typischerweise 1 µm und 2000 µm, bevorzugt zwischen 5 µm und 1000 µm auf.

Das erfindungsgemäße selbstklebende Produkt nach Fig. 7.6 enthält eine Schicht erfindungsgemäßen Materials als Mittelschicht, die auf beiden Seiten mit beliebigen Haftklebemassen gleicher oder verschiedener Art ausgestattet ist. Eine oder beide Seiten der Mittelschicht können mit einer funktionalen Schicht ausgerüstet sein, die beispielsweise als Sperrschicht fungieren kann. Bei den äußeren Haftklebemasseschichten brauchen keine erfindungsgemäßen Haftklebemassen zum Einsatz kommen. Die äußeren Haftklebemasseschichten können optional mit Trennpapieren oder Trennfolien eingedeckt werden. Die äußeren Haftklebemasseschichten weisen unabhängig voneinander Schichtdicken zwischen typischerweise 1 µm und 2000 µm, bevorzugt zwischen 5 µm und 1000 µm auf. Die Dicke der Mittelschicht beträgt typischerweise zwischen 1 µm und 2000 µm, bevorzugt zwischen 5 µm und 1000 µm.

### Prüfmethoden

In der Beschreibung dieser Erfindung sind Zahlenwerte für erfindungsgemäße Systeme aufgeführt und es wird Bezug genommen auf Prüfmethoden, mittels derer solche Daten ermittelt werden können. Im Folgenden sind diese Prüfmethoden zusammengestellt.

### Bestimmung des Gelanteils (Test A)

Beschichtete und vernetzte lösungsmittelfreie Haftklebemassenproben werden in ein Vliestütchen aus Polyethylen eingeschweißt. Lösliche Bestandteile werden mit Toluol über eine Dauer von drei Tagen unter täglichem Lösungsmittelaustausch extrahiert. Aus der Differenz der Probengewichte vor der Extraktion und nach der Extraktion wird der Gelwert als prozentuale Angabe des Gewichtsanteils des Polymers, das nicht mit Toluol extrahierbar ist, bestimmt.

### Bestimmung der Klebkraft (Test B)

Die Prüfung der Schälfestigkeit (Klebkraft) erfolgt in Anlehnung an PSTC-1. Auf eine 25 µm dicke PET-Folie wird eine 50 µm dicke Haftklebeschicht aufgebracht. Ein 2 cm breiter Streifen dieses Musters wird auf eine geschliffene Stahlplatte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen.

### Bestimmung der Scherstandzeit (Test C)

Die Prüfung erfolgt in Anlehnung an PSTC-7. Auf eine 25 µm dicke PET-Folie wird eine 50 µm dicke Haftklebeschicht aufgebracht. Ein 1,3 cm breiter Streifen dieses Musters wird auf einem polierten Stahlplättchen auf einer Länge von 2 cm mit einer 2 kg-Rolle durch zweimaliges doppeltes Überrollen verklebt. Die Plättchen werden für 30 min unter Testbedingungen (Temperatur und Luftfeuchtigkeit), aber ohne Last äquilibriert. Dann wird das Testgewicht angehängt, so dass eine Scherbeanspruchung parallel zur Verklebungsfläche entsteht, und die Zeit gemessen, bis die Verklebung versagt.

### Mikroschertest (Test D)

Dieser Test dient der Schnellprüfung der Scherfestigkeit von Klebebändern unter Temperaturbelastung.

### Messprobenpräparation für Mikroschertest:

Ein aus dem jeweiligen Probenmuster geschnittenes Klebeband (Länge ca. 50 mm, Breite 10 mm) wird auf eine mit Aceton gereinigte Stahl-Prüfplatte verklebt, so dass die Stahlplatte das Klebeband rechts und links überragt und dass das Klebeband die Prüfplatte am oberen Rand um 2 mm überragt. Die Verklebungsfläche der Probe beträgt Höhe x Breite = 13mm x 10 mm. Die Verklebungsstelle wird anschließend mit einer 2 kg-Stahlrolle und einer Geschwindigkeit von 10 m/min sechsmal überrollt. Das Klebeband wird bündig mit einem stabilen Klebestreifen verstärkt, der als Auflage für den Wegmessfühler dient. Die Probe wird mittels der Prüfplatte senkrecht aufgehängt.

### Mikroschertest:

Das zu messende Probenmuster wird am unteren Ende mit einem Gewicht von 100 g belastet. Die Prüftemperatur beträgt 40°C, die Prüfdauer 30 Minuten (15 Minuten Belastung und 15 Minuten Entlastung). Die Scherstrecke nach der vorgegebenen Testdauer bei konstanter Temperatur wird als Ergebnis in µm angegeben, und zwar als Maximalwert ["max"; maximale Scherstrecke durch 15 minütige Belastung]; als Minimalwert ["min"; Scherstrecke ("Restauslenkung") 15 min nach Entlastung; bei Entlastung erfolgt eine Rückbewegung durch Relaxation]. Angegeben wird ebenfalls der elastische Anteil in Prozent ["elast"; elastischer Anteil = (max - min)*100 / max].

### SAFT-Shear.Adhesive.Failure Temperature (Test E)

Der SAFT-Test ist eine Schnellprüfung der Kurzzeittemperaturbeständigkeit der Klebemassen bzw. Klebebänder. Die Muster wurden mit einer 50 µm Aluminiumfolie verstärkt und die verbleibende Klebeseite auf eine geschliffene, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe betrug, Höhe x Breite, 13 mm x 10 mm. Der obere Teil des Musters, der die Prüfplatte um 2 mm überragt, wurde mit einem stabilen Klebestreifen verstärkt. Dort wurde, nachdem die Probe senkrecht aufgehängt wurde, der Wegemessfühler aufgelegt. Die zu messende Probe wurde am unteren Ende mit einem Gewicht von 50 g belastet. Die Stahl-Prüfplatte mit der verklebten Probe wurde dann, beginnend bei 25 °C, mit einer Rate von 9°C pro Minute auf die Endtemperatur von 200°C aufgeheizt. Gemessen wurde der Rutschweg der Probe mittels Wegmessfühler in Abhängigkeit von Temperatur und Zeit. Beendet wurde die Messung bei Erreichen der vorgesehenen Endtemperatur oder bei Erreichen einer Rutschstrecke von > 1000 µm.

Der SAFT-Test kann zwei Prüfmerkmale liefern: SAFT-Scherweg oder SAFT-Kurzzeittemperaturbeständigkeit. Der SAFT-Scherweg ist die Rutschstrecke in µm bei Erreichen der Endtemperatur. Die SAFT-Kurzzeittemperaturbeständigkeit ist die Temperatur, bei der eine Rutschstrecke von 1000 µm erreicht wird. Angegeben ist jeweils der Mittelwert einer Doppelbestimmung.

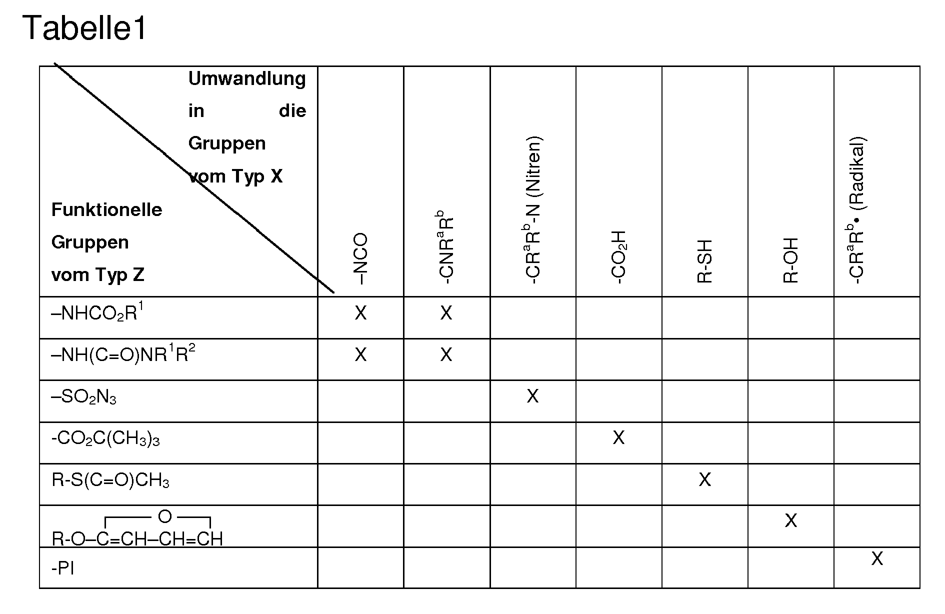

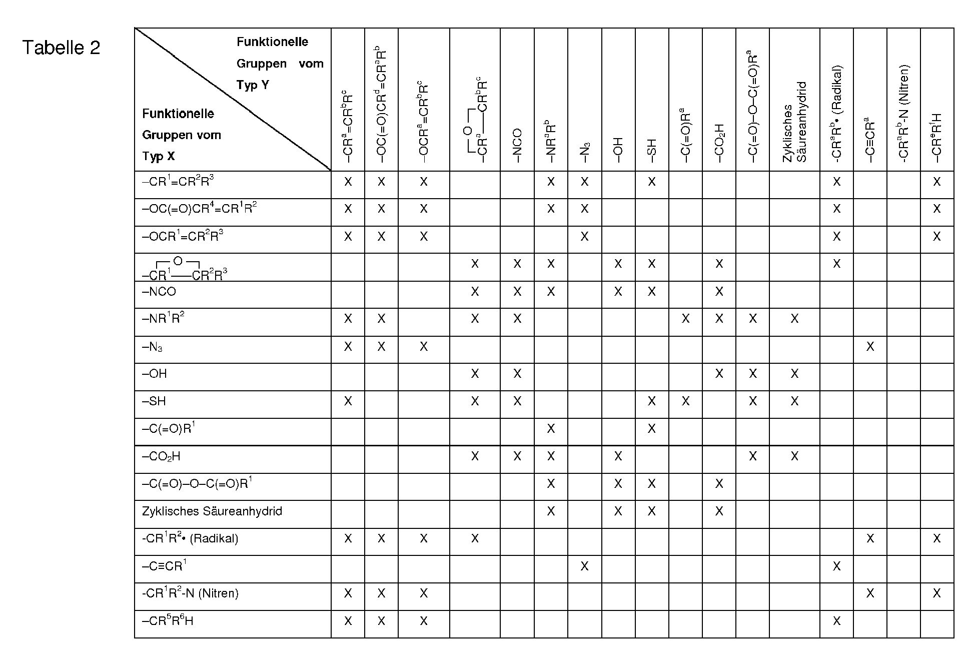

### Beispiele

### Beispiel 1: Herstellung von N-(Triethoxvsilylpropyl)-glycinbenzoinester (Benzoinacrylat-Aminosilan-Addukt)

22,1 g (0,1 mol) γ-Aminopropyl-triethoxysilan (Dynalsylan^{®} AMEO, DEGUSSA AG) wurden in einem 250 mL Braunglas-Dreihalskolben. Anschließend wurden 26,6 g (0,1 mol) Benzoinacrylat in 80 mL THF mit einem Tropftrichter zu der AMEO-Lösung langsam getropft, wobei darauf geachtet wurde, dass die Innentemperatur nicht über 30°C stieg. Die Lösung wurde mit einem Wasserbad gekühlt. Die Lösung wurde 20 Stunden bei Raumtemperatur gerührt und anschließend das Lösungsmittel im Vakuum entfernt, wodurch 58,9 g eines bernsteinfarbenen Öls erhalten wurden. Die NMRspektroskopische Analyse des Rohprodukts ergab, dass das gewünschte Produkt mit einer Reinheit von >90 % vorlag.

### Verfahren 1: Oberflächenmodifikation der Füllstoffe

Die Oberflächenmodifikation erfolgte in Anlehnung an F. Bauer, H. Ernst, U. Decker, M. Findeisen, H.-J. Gläsel, H. Langguth, E. Hartmann, R. Mehnert, C. Peuker, Macromol. Chem. Phys. 2000, 201, 2654-2659.
Füllstoffe, die als Feststoff vorliegen, müssen zunächst in Isopropanol oder Aceton dispergiert werden. Hierzu wurden zwei verschiedene Dispergiermethoden angewendet. Zum einen das Rotor-Stator-Verfahren mit einem Ultra-Turrax^{®} T 25 basic der Firma IKA-WERKE GMBH & CO. KG, Deutschland, und zum anderen wurden die Partikel mit Ultraschall behandelt, wobei der Ultraschallprozessor UP200S der Firma HIELSCHER, Deutschland, verwendet wurde mit verschiedenen Sonotrodengeometrien und einer Frequenz von 1 kHz. Die Dispersionen wiesen einen Feststoffgehalt von 10 bis 30 Gew.-% auf.
Zu der Füllstoffdispersion in einem Einhalskolben mit Rückflusskühler wurde unter starkem Rühren das funktionalisierte Silan gegeben (0,2 - 0,6 mmol Silan pro Gramm Füllstoff). Anschließend wurde eine 0,1 M Lösung aus Maleinsäure in Wasser (0,2 mL pro Gramm Füllstoff) langsam zugetropft und das Reaktionsgemisch bei 60°C für vier Stunden gerührt. Die Dispersion ist für ca. vier Tage stabil und kann ohne weitere Aufarbeitung verarbeitet werden. Die kontinuierliche Phase kann aber ebenfalls im Vakuum entfernt werden und der resultierende Feststoff nach dem Trocknen als Vernetzer weiterverarbeitet werden.

### Verfahren 2: Herstellung der modifizierten Schmelzhaftkleber auf Acrylatbasis

Die Acrylatschmelzhaftkleber wurden in einem Fütterextruder (Einschneckenförderextruder der Firma TROESTER GmbH & Co KG, Deutschland) aufgeschmolzen und mit diesem als Polymerschmelze direkt in einen WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene^{®} T110 (DRT RÉSINES, Frankreich, Klebharz auf Terpen-Phenolbasis, Erweichungspunkt 110 °C, Hydroxylwert 45-60) in Zone 1 zudosiert und homogen eingemischt. Exemplarisch sind hier für die Harzcompoundierung mit einem Basispolymer bestehend aus Ethylhexylacrylat, Butylacrylat, Methylacrylat, 2-Hydroxyethylmethacrylat (HEMA) und Acrylsäure (43,5:43,5:8:2:3) die Parameter dargelegt. Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117 °C und die Massetemperatur bei Austritt (Zone 3) bei 100 °C.

### Verfahren 3: Herstellung der modifizierten Haftkleber in Lösung und Labormuster

Zu einer Polymerlösung mit einem Feststoffgehalt zwischen 40 und 60 Gew.-% wurden die jeweiligen Mengen an Harzen, Alterungsmitteln, modifizierten Füllstoffen (vorliegend als Dispersion) und falls erforderlich zusätzlichen Vernetzungsreagenzien gegeben und das Gemisch 12 Stunden auf der Rollbank homogenisiert. Teilweise wurden auch weitere Mengen an Lösungsmittel zugegeben um eine für die Ausstriche geeignete Viskosität einzustellen. Anschließend wurde das Gemisch mit einer Rakel auf einem Träger (Folie, Papier, Vlies) mit einem definierten Masseauftrag (Flächengewicht) ausgestrichen und das Labormuster bei erhöhter Temperatur im Trockenschrank getrocknet.

### Verfahren 4: Herstellung der erfindungsgemäßen Klebebänder, Abmischung mit den als Vernetzer dienenden funktionalisierten Partikel und Beschichtung

Die nach den Verfahren 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung der Partikel und der in einigen Fällen zusätzlich benötigten Kopplungsreagenzien in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Füllstoffpartikel, Partikeldispersionen und Kopplungsreagenzien erfolgt mit geeignetem Dosierequipment gegebenenfalls an mehreren Stellen (Fig. 8: Dosierstellen 1.1 und 1.2; weiterhin bedeuten: 1.3 = Doppelschneckenextruder, BW = Bahnwalze; RW = Rakelwalze eines Zweiwalzenauftragswerkes; letzteres hier nur beispielhaft und nicht einschränkend dargestellt) und gegebenenfalls unter Verwendung von Dosierhilfsmitteln in die druckfreien Förderzonen des Doppelschneckenextruders.
Nach Austritt der fertig compoundierten, d.h. mit den Partikeln und dem teilweise zusätzlich benötigten Kopplungsreagenzien abgemischten Klebmasse aus dem Doppelschneckenextruder (Austritt: Runddüse, 5 mm Durchmesser), erfolgt die Beschichtung nach Fig.8 auf ein bahnförmiges Trägermaterial. Die Zeit zwischen Zudosierung der mit Vernetzern oberflächenmodifizierten Partikel bis zum Ausformen bzw. Beschichten wird als Verarbeitungszeit bezeichnet. Die Verarbeitungszeit gibt den Zeitraum an, in welcher die mit den Partikeln abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze (RW) des 2-Walzenauftragswerks wird nicht angetrieben.

### Beispiel 2-5 (Carbamat-funktionalisierte Partikel):

Es wurden nach Verfahren 1 zwei Silicapartikeltypen verschiedener Morphologie funktionalisiert, die schon beide in Isopropanol dispergiert vorlagen (Aerosil^{®} VP Disp LE 7520 von der DEGUSSA AG (pyrogene Kieselsäure), Durchmesser: 70 nm, 20 Gew.-% in Isopropanol, fraktale Geometrie; Highlink® NanoG von CLARIANT (gefällte Kieselsäure), Durchmesser: 13 nm, 30 Gew.-% in Isopropanol, sphärische Partikel). Zur Modifikation der Oberfläche wurden (3-Triethoxysilylpropyl)-*tert-*butylcarbamat von der Firma GELEST INC., USA und *N*-(Trimethoxysilylmethyl)-*O*-methylcarbamat (Geniosil^{®} XL 63, WACKER-CHEMIE GMBH) verwendet.

**Tabelle 3: Mittels dynamischer Lichtstreuung gemessene Partikeldurchmesser.**

| Silan | Silica | Teilchendurchmesser unmodifizier | Teilchendurchmesser modifiziert |
|---|---|---|---|
| | | [nm] | [nm] |
| *tert-*Butylcarbamat | Aerosil^{®} VP Disp LE 7520 | 70 | 143 |
| *tert-* Butylcarbamat | Highlink^{®} NanoG | 13 | 33 |
| Ethylcarbamat | Aerosil^{®} VP Disp LE 7520 | 70 | 140 |
| Ethylcarbamat | Highlink^{®} NanoG | 13 | 34 |

100 g eines Polyacrylates bestehend aus Ethylhexylacrylat, Butylacrylat, Methylacrylat, 2-Hydroxyethylacrylat und Acrylsäure (43.5:43.5:8:2:3) und einer Glasübergangstemperatur Tg von -31.2°C und 30 g vom Terpenphenolharz Dertophene^{®} DT 110 (Fa. DRT RÉSINES, Frankreich) wurden in 80 mL eines 1:1-Gemischs aus Benzin/Aceton gelöst und anschließend die modifizierten Partikel als Dispersion zugegeben (1, 2.5, 5 und 10 Gew.-% bezogen aufs Polymer) und die Mischung homogenisiert (Verfahren 3). Die Klebemasse wurde mit einem Masseauftrag von 50 g/m² auf einer 23 µm dicken, geätzten PET-Folie (Fa. LAUFENBERG GMBH) ausgestrichen und 10 Minuten bei 120°C bzw. 180°C getrocknet.

**Tabelle 4: Klebtechnische Daten.**

| Messung | Silica | Silan | pure Masse | 1 Gew.-% | 2.5 Gew.-% | 5 Gew.-% | 10 Gew.-% |
|---|---|---|---|---|---|---|---|
| **Klebkraft Stahl [N/cm]** | | | | | | | |
| Trocknung bei 180°C | Aerosil® VP Disp LE 7520 | *tert-*Butylcarbamat | 8,23 | 7,88 | 6,99 | 6,75 | 6,01 |
| | | Ethylcarbamat | 8,24 | 8,09 | 7,54 | 6,82 | 6,03 |
| | Highlink® NanoG | *tert-* Butylcarbamat | 8,18 | 7,01 | 7,21 | 6,96 | 6,14 |
| | | Ethylcarbamat | 8,20 | 7,95 | 8,03 | 7,05 | 7,03 |
| **Scherstandszeit RT (70°C) [min]** | | | | | | | |
| Trocknung bei 120 °C | Aerosil® VP Disp LE 7520 | Ethylcarbamat | 16 (0) | 24 (0) | 26 (0) | 32 (0) | 58 (0) |
| | Highlink® NanoG | Ethylcarbamat | 16 (0) | 22 (0) | 23 (0) | 24 (0) | 57 (0) |
| Trocknung bei 180 °C | Aerosil® VP Disp LE 7520 | Ethylcarbamat | 17 (0) | 702 (5) | 10000 (1466) | 10000 (10000) | 10000 (10000) |
| | Highlink® NanoG | Ethylcarbamat | 16 (0) | 4758 (41) | 9712 (302) | 10000 (480) | 10000 (238) |
| **Mikroscherweg [µm]** | | | | | | | |
| Trocknung bei 180 °C | Aerosil® VP Disp LE 7520 | Ethylcarbamat | 433 | 386 | 207 | 72 | 32 |
| | Highlink® NanoG | Ethylcarbamat | 433 | 297 | 267 | 112 | 101 |

### Beispiel 6: Partikel mit desaktivierter Phenolmodifikation:

Nach Verfahren 1 wurden die Silicapartikel von der DEGUSSA AG (Aerosil^{®} VP Disp LE 7520) mit 2-Hydroxy-4-(3-triethoxysilylpropoxy)-diphenylketon von der Firma GELEST INC. modifiziert. Nach Verfahren 2 wurde das dort beschriebene Basispolymer mit dem Harz Dertophene^{®} DT 110 gemischt und anschließend nach Verfahren 4 weiterarbeitet. Es wurden zunächst die Partikel und im Anschluss ein trifunktioneller Vernetzer auf Isocyanatbasis (Desmodur XP 2410, BAYER MATERIAL SCIENCE) zudosiert und die Schmelzemischung bei 120°C homogenisiert. Die Klebemasse wurde mit einem Masseauftrag von 50 g/m² auf eine 23 µm dicke, geätzte PET-Folie (Fa. LAUFENBERG GMBH) aufgetragen.

**Tabelle 5: Klebtechnische Daten.**

| Messung | pure Masse | 0.3 Gew.-% Desmodur XP 2410 | 5 Gew.-% unmodifiziertes Aerosil^{®} VP Disp LE 7520, 0,3 Gew.-% Desmodur XP 2410 | 5 Gew.-% modifiziertes Aerosil^{®} VP Disp LE 7520, 0,3 Gew.-% Desmodur XP 2410 |
|---|---|---|---|---|
| Klebkraft Stahl [N/cm] | 8,25 | 7,37 | 6,70 | 6,79 |
| Scherstandszeit RT [min] | 16 | 10000 | 10000 | 10000 |
| Scherstandszeit 70°C [min] | 0 | 141 | 93 | 10000 |
| Mikroscherweg [µm] | 1277 | 115 | 164 | 66 |

### Beispiel 7: Vernetzung von Naturkautschuk mit Sulfonazid-modifizierten Partikeln

Nach Verfahren 1 wurden die Silicapartikel Aerosil^{®} VP Disp LE 7520 von der DEGUSSA AG mit 6-Azidosulfonylhexyltriethoxysilan von der Firma GELEST INC. modifiziert. Anschließend wurden 55,4 g Kautschuk TSR Natur (EASTMAN CHEMICAL COMPANY), 5,9 g Staybelite Resin E (EASTMAN CHEMICAL COMPANY), 5,3 g Dymerex (EASTMAN CHEMICAL COMPANY), 32,7g Dercolyte S 115 (DRT RÉSINES, Frankreich) und 0,6 g Irganox 1520 (CIBA SPECIALITY CHEMICALS) und 1, 5 und 10 Gew.-% der modifizierten Silicapartikel bezogen auf den Kautschuk nach Verfahren 3 mit 127 g Toluol vermischt und auf der Rollbank über einen Zeitraum von 12 Stunden homogenisiert. Das Klebemassegemisch wurde auf einem Krepp-Papier mit einem Masseauftrag von 45 g/m² aufgetragen und im Anschluss 15 Minuten für 140°C getrocknet, damit sich das Nitren als reaktive Zwischenstufe bilden kann. Die weitere Reaktion kann auch bei Raumtemperatur durchgeführt werden.

**Tabelle 6: Klebtechnische Daten.**

| Füllstoffgehalt [%] | Klebkraft [N/cm] | Scherstandzeit [min] | Mikroscherweg 500 g [µm] | Elastischer Anteil [%] | SAFT |
|---|---|---|---|---|---|
| 0 | 2,89 | 121 | 1350 | 8,9 | 132 °C |
| 1 | 2,94 | 207 | 525 | 10,5 | 150 °C |
| 5 | 2,83 | 4515 | 200 | 32,5 | 201 °C |
| 10 | 2,18 | 10000 | 148 | 24,3 | 198 µm |

### Beispiel 8-9: Vernetzung von SIS und SBS mit Sulfonazid-modifizierten Partikeln

Nach Verfahren 1 wurden die elongierten Silicapartikel Organosilicasol^{™} IPA-ST-UP von NISSAN CHEMICAL AMERICA CORPORATION (Durchmesser: 10 - 15 nm, Länge: 40 - 100 nm, 31 Gew.-% in Isopropanol) mit 6-Azidosulfonylhexyltriethoxysilan von der Firma GELEST INC. modifiziert. Anschließend wurden 1 Gew.-% der modifizierten Silicapartikel bezogen auf den Synthesekautschuk und die SIS-Klebemasse (89 g Kraton 1165 (EASTMAN CHEMICAL COMPANY), 90 g Dercolyte S 115 (DRT RÉSINES, Frankreich), 20g Wingtack 10 (SARTOMER) und 1 g Irganox 1010 (CIBA SPECIALITY CHEMICALS)) bzw. die SBS-Klebemasse (69 g Kraton D 1102 (EASTMAN CHEMICAL COMPANY), 20 g Kraton D 1118 (EASTMAN CHEMICAL COMPANY), 90 g Dercolyte S 115 (DRT RÉSINES, Frankreich), 20 g Wingtack 10 (SARTOMER) und 1 g Irganox 1010 (CIBA SPECIALITY CHEMICALS)) nach Verfahren 3 mit 216 g Benzin, 54 g Aceton und 30 g Toluol vermischt und auf der Rollbank über einen Zeitraum von 12 Stunden homogenisiert. Das Klebemassegemisch wurde auf einer 23 µm dicken, geätzten PET-Folie (Fa. LAUFENBERG GMBH) mit einem Masseauftrag von 50 g/m² aufgetragen und im Anschluss 15 Minuten für 140°C getrocknet, damit sich das Nitren als reaktive Zwischenstufe bilden kann. Die weitere Reaktion kann auch bei Raumtemperatur durchgeführt werden.

**Tabelle 7: Klebtechnische Daten.**

| Füllstoffgehalt [%] | Klebkraft [N/cm] | Scherstandzeit 40°C [min] | Mikroscherweg 1 kg [µm] | Elastischer Anteil [%] | SAFT |
|---|---|---|---|---|---|
| **SIS-Masse** | | | | | |
| 0 | 9,93 | 5682 | 215 | 89,6 | 115°C |
| 1 | 11,50 | 10000 | 109 | 92,6 | 135 °C |
| **SBS-Masse** | | | | | |
| 0 | 12,24 | 6980 | 123 | 76,5 | 117°C |
| 1 | 7,99 | 10000 | 85 | 87,8 | 127 °C |

## Patentansprüche

1. Verfahren zur Herstellung einer Haftklebemasse umfassend das Vernetzungsprodukt aus zumindest einem Polymer und zumindest einer Sorte funktionalisierter Partikeln,
- wobei das Polymer reaktive Zentren aufweist,
- wobei die funktionalisierten Partikeln zumindest eine nichtpolymere Basiseinheit aufweisen, die nichtpolymere Basiseinheit eine Oberflächenmodifikation aufweist,
wobei die Oberflächenmodifikation der nichtpolymeren Basiseinheit zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen,
**dadurch gekennzeichnet, dass** das Verfahren die folgenden Verfahrensschritte umfasst:
- Umwandlung zumindest eines Teils der funktionellen Gruppen Z der Partikeln durch Energiezufuhr unter Überwindung der Umwandlungs-Aktivierungsenergie in funktionelle Gruppen X, die in der Lage sind, unter geeigneten Verfahrensbedingungen eine Reaktion mit den reaktive Zentren des Polymers einzugehen,
- Bildung des Vernetzungsproduktes, umfassend die Reaktion der funktionellen Gruppen X der Partikeln mit den reaktive Zentren des Polymers unter den geeigneten Verfahrensbedingungen.

2. Verfahren nach Anspruch 1, **dadurch gekennzeichnet, dass**
die funktionalisierten Partikeln auf denselben oder weiteren nichtpolymeren Basiseinheiten weiterhin funktionelle Gruppen Xₐ aufweisen,
wobei in dem Verfahren bereits vor der Umwandlung der Gruppen Z in die Gruppen X ein Vernetzungsschritt stattfindet, der die Reaktion der funktionellen Gruppen Xₐ mit den reaktiven Zentren des Polymers umfasst.

3. Verfahren nach Anspruch 1 oder 2, **dadurch gekennzeichnet, dass** die zugeführte Energie thermische Energie, elektromagnetische Strahlung, Partikelstrahlung und/oder Schallenergie ist.

4. Verfahren nach einem der Ansprüche 1 bis 3, **dadurch gekennzeichnet, dass**
die reaktiven Zentren des Polymers funktionelle Gruppen Y sind.

5. Verfahren nach einem der vorangehenden Ansprüche, **dadurch gekennzeichnet, dass** die funktionalisierten Partikeln als Dispersion eingesetzt werden; insbesondere dispergiert in Wasser und/oder organischen Lösungsmitteln.

6. Verfahren nach einem der vorangehenden Ansprüche, **dadurch gekennzeichnet, dass** als funktionalisierte Partikeln Oxide anorganischer Natur - insbesondere Metalloxide und/oder Halbmetalloxide -, Salze der Erdalkalimetalle sowie Minerale auf Silikatbasis, insbesondere Tonminerale und Tone eingesetzt werden.

7. Verfahren nach einem der vorangehenden Ansprüche, **dadurch gekennzeichnet, dass** als funktionalisierte Partikeln sphärische, stäbchenförmige und/oder plättchenförmige Partikeln und/oder Aggregate aus den vorgenannten Erscheinungsformen eingesetzt werden.

8. Verfahren nach einen der vorangehenden Ansprüche, **dadurch gekennzeichnet, dass** die Partikeln in zumindest einer ihrer Raumdimensionen nanoskalig sind.

9. Verfahren nach einem der vorangehenden Ansprüche, **dadurch gekennzeichnet, dass** als funktionalisierte Partikeln Aggregate aus kugelförmigen Primärpartikeln eingesetzt werden, insbesondere Aggregate, bei denen alle drei Raumdimensionen jeweils eine Ausdehnung von nicht mehr als 100 nm, besser nicht mehr als 90 nm einnehmen.

10. Verfahren nach einem der vorangehenden Ansprüche, **dadurch gekennzeichnet, dass** die funktionalisierten Partikeln in einem Konzentrationsbereich von 0,1 bis 15 Gew.-%, insbesondere von 0,1 bis 5 Gew.-%, besonders bevorzugt von 0,1 bis 1,5 Gew.-%, bezogen auf das Polymer, eingesetzt werden.

11. Verfahren nach einem der vorangehenden Ansprüche, **gekennzeichnet dadurch, dass** die Umwandlung der funktionellen Gruppen Z in die funktionellen Gruppen X und die Reaktion mit den reaktiven Zentren des Polymers gleichzeitig ablaufen.

12. Verfahren nach einem der vorangehenden Ansprüche, **dadurch gekennzeichnet, dass** es sich bei der Umwandlung der Gruppen Z in die Gruppen X um eine Entfernung von Schutzgruppen oder eine Deblockierung handelt.

13. Haftklebemasse, erhältlich nach einem Verfahren nach einem der vorangehenden Ansprüche.

14. Haftklebemasse, basierend auf zumindest einer vernetzten Polymerkomponente,
wobei die Vernetzung der Polymerkomponente zumindest zum Teil durch den Einbau funktionalisierter Partikeln bewirkt wird,
wobei die Partikeln vor dem Einbau zumindest eine nichtpolymere Basiseinheit aufweisen, die zumindest zum Teil derart oberflächenmodifiziert ist, dass sie mit einer Sorte funktioneller Gruppen Z ausgerüstet ist,
wobei die Gruppen Z nach Umwandlung mittels Energiezufuhr in Gruppen X in der Lage sind, mit in der Polymerkomponente vorhandenen reaktiven Zentren des Polymers zu reagieren.

15. Polymermischung umfassend zumindest ein Polymer und zumindest eine Sorte funktionalisierter Partikeln,
- wobei das Polymer reaktive Zentren, insbesondere funktionelle Gruppen Y, aufweist,
- wobei die funktionalisierten Partikeln zumindest eine nichtpolymere Basiseinheit aufweisen, die nichtpolymere Basiseinheit eine Oberflächenmodifikation aufweist,
wobei die Oberflächenmodifikation der nichtpolymeren Basiseinheit zumindest eine Sorte funktioneller Gruppen Z aufweisen, die unter den Bedingungen bei der Herstellung und Verarbeitung des Polymers und/oder der unvernetzten Haftklebemasse keine Reaktion mit den reaktiven Zentren des Polymers eingehen, wobei die funktionellen Gruppen Z durch Energiezufuhr unter Überwindung der Umwandlungs-Aktivierungsenergie in funktionelle Gruppen X umwandelbar sind, die in der Lage sind, unter geeigneten Verfahrensbedingungen eine Reaktion mit den reaktiven Zentren des Polymers einzugehen.

16. Verwendung von oberflächenmodifizierten funktionalisierten Partikeln mit einer nichtpolymeren Basiseinheit als Vernetzungsreagenzien zur Vernetzung von Polymeren zur Herstellung von Haftklebemassen.
